(19) Europäisches Patentamt / European Patent Office / Office européen des brevets

(11) **EP 4 165 799 B1**

(12) **EUROPEAN PATENT SPECIFICATION**

(45) Date of publication and mention
of the grant of the patent:
**02.08.2023 Bulletin 2023/31**

(21) Application number: **21773058.9**

(22) Date of filing: **03.09.2021**

(51) International Patent Classification (IPC):
*H04B 7/185* $^{(2006.01)}$

(52) Cooperative Patent Classification (CPC):
**H04B 7/18506**

(86) International application number:
**PCT/EP2021/074392**

(87) International publication number:
**WO 2023/030650 (09.03.2023 Gazette 2023/10)**

(54) **AIRCRAFT COLLISION AVOIDANCE METHOD AND DEVICE**

VERFAHREN UND GERÄT ZUR VERMEIDUNG VON FLUGZEUGKOLLISIONEN

PROCÉDÉ ET DISPOSITIF D'ÉVITEMENT DE COLLISION D'AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2023 Bulletin 2023/16**

(73) Proprietor: **Flarm Technology AG**
**6300 Zug (CH)**

(72) Inventors:
• **MÄDER, Urban**
**8925 Ebertswil (CH)**
• **MORATTI, Michael**
**6319 Allenwinden (CH)**
• **KAUFMANN, Thomas**
**8908 Hedingen (CH)**

(74) Representative: **E. Blum & Co. AG**
**Patent- und Markenanwälte VSP**
**Vorderberg 11**
**8044 Zürich (CH)**

(56) References cited:
**US-A1- 2018 027 382**

• **KACEM THABET ET AL: "Key distribution mechanism in secure ADS-B networks", 2015 INTEGRATED COMMUNICATION, NAVIGATION AND SURVEILLANCE CONFERENCE (ICNS), IEEE, 21 April 2015 (2015-04-21), XP032784152, DOI: 10.1109/ICNSURV.2015.7121252 [retrieved on 2015-06-10]**

**Description**

Technical Field

The invention relates to a device, method, and system for wirelessly broadcasting information pertaining to an aircraft for traffic awareness and collision avoidance.

Background Art

Every year, a substantial number of VFR (visual flight rules) aircraft are involved in mid-air collisions. Unfortunately, half of these incidents are fatal. Surprisingly, most of these accidents happen in good visibility and during daylight conditions.

Accident investigations have shown that the VFR-principle of "see and avoid" is insufficient, as it is often nearly impossible to see the other aircraft. The human visual system is not well suited for objects on a collision course, because these are on a fixed vector from the aircraft, i.e. the image of a foreign aircraft does not "move" on the pilot's retina. Other biological, physiological, and psychological effects ("human factors") as well as limited cockpit visibility in a typical General Aviation aircraft further decrease the chance of seeing the other aircraft early enough to avoid a mid-air collision.

Traditional FLARM as well as newer PowerFLARM devices (see, e.g. https://flarm.com/wp-content/uploads/man/FLARM-General-EN.pdf as accessed on 2021-02-05) work by calculating and broadcasting their own future flight paths to nearby aircraft together with a unique identifier. At the same time, they receive the future flight paths from surrounding aircraft. All these values are stored in broadcasted data packets. Then, an intelligent motion prediction algorithm calculates a collision risk for each aircraft. When a collision probability exceeds a threshold, the pilots are alerted with the relative position of the other aircraft, enabling them to avoid the collision.

Besides issuing collision warnings, FLARM devices can also show nearby aircraft on an overview screen showing surrounding airspace. This helps pilots to detect the other aircraft and perform an evasive maneuver before a collision warning becomes necessary.

KACEM THABET et al.: "Key distribution mechanism in secure ADS-B networks", 2015 INTEGRATED COMMUNICATION, NAVIGATION AND SURVEILLANCE CONFERENCE (ICNS), IEEE, 21 April 2015 relates to an increased data security in ADS-B packages.

US 2018/027381 A1 discloses systems and methods of aircraft surveillance and tracking.

However, it is cumbersome with at least some of such prior art devices to implement a protocol update for data packets, e.g. for security or functionality reasons. The option of a hard firmware expiration mechanism renders these prior art devices inoperable at a predefined date thus forcing users to update to retain compatibility with each other. However, this is only possible at the cost of manual user intervention for all devices, which can be cumbersome and expensive, particularly in complex aircraft avionics systems.

Disclosure of the Invention

The problem to be solved by the present invention is therefore to at least in part overcome these shortcomings of prior art solutions while still providing reliable collision avoidance functionality.

This problem is solved by the devices and methods of the independent claims.

Accordingly, a broadcast device for wirelessly broadcasting information pertaining to a first aircraft comprises a positioning device (e.g. a GNSS receiver such as a GPS receiver, a GLONASS receiver, and/or a Galileo receiver) configured to determine a position P1 of the broadcast device or - if the broadcast device is mounted to, affixed at, or situated in or at the aircraft or a pilot onboard the aircraft - of the aircraft. The position P1 advantageously comprises a latitude, a longitude and an altitude. The position P1 can optionally at least in part be determined and/or enhanced from on-board navigational systems of the aircraft such as a barometric pressure sensor, a magnetic sensor, an acceleration sensor, an inertial navigation system, etc., e.g. to increase the altitude precision which can be rather poor for typical GNSS devices without correction. In such a case, the combined GNSS receiver together with the additional sensor/system as well as any data fusion logics involved qualifies as "positioning device" according to the invention.

The broadcast device further comprises a control unit (such as a microcontroller with a memory) which is configured to receive the position P1 from the positioning device, preferably via an internal bus such as a serial or an I2C bus. Thus, the control unit can further process the position P1, e.g. add it to a to-be-broadcasted data packet (see below). In addition, the control unit is configured to (advantageously repeatedly for each packet, see below) generate the data packet D1 comprising the received position P1, comprising an identifier ID1 of the broadcast device, comprising a packet protocol version VER1 of the data packet D1 and comprising a maximum supported packet protocol version VER1_MAX of the broadcast device. The term "comprising" is to be understood in such a way that the mentioned information or values indicative thereof are comprised in the data packet D1.

The data packet D1 is generated based on the packet protocol version VER1. The term "based on" is to be understood in a way that the data packet D1 is generated according to the rules, comprised values, and semantics of the respective packet protocol version VER1. It should be noted here that the packet protocol versions are advantageously backward compatible for the broadcasting and for the receiving broadcast devices, i.e. a broadcast device which supports a maximum packet protocol version of, e.g. v5 is able to send and receive - in addition to a v5-data packet - data packets with all lower packet protocol versions as well, e.g. v0, v1, v2, v3, and v4.

Note that further information can optionally be determined by the positioning device and/ or generated by the control unit, e.g. ground speed, course/track, climb rate, acceleration, turn rate, movement mode, horizontal position accuracy, vertical position accuracy, velocity accuracy, a future flight trajectory, e.g. as computed from the current position P1 and velocity and/ or acceleration and/ or wind vectors, etc. This further information or values indicative thereof can then be added to the data packet D1 which improves the calculation of collision probabilities and/or situational awareness.

According to the invention, the broadcast device further comprises a radio transmitter which is configured to receive the generated data packet D1 from the control unit, e.g. via an internal bus such as an I2C or a serial bus. The data packet D1 is indicative of the to-be-broadcasted information pertaining to the first aircraft (at least when the broadcast device is mounted to, affixed at, or situated in or at the aircraft or a pilot onboard the aircraft) and it is wirelessly broadcasted by the radio transmitter, e.g. to ground based receiver stations and/ or to adjacent aircraft. Thus, a receiver of the data packet D1 can reconstruct the position P1 and - using these values - e.g. calculate a collision probability and - depending thereon - putatively issue a warning to the pilot. This enhances the safety of the aircraft(s) and/or overall situational awareness.

In an advantageous embodiment, the broadcast device is configured to determine the packet protocol version VER1 of the data packet D1 depending on a capability (advantageously on a maximum supported foreign packet protocol version VER2_MAX or information indicative thereof) of a foreign (e.g. remote) broadcast device which is in radio range to the broadcast device under consideration. This enables the broadcast device to "talk" to the foreign broadcast device "in an understandable language", e.g., with a lower packet protocol than its maximum supported packet protocol version VER1_MAX, which improves compatibility between the broadcast devices.

In an advantageous embodiment, the broadcast device further comprises a radio receiver (or a combined radio transceiver for broadcasting and receiving data packets) which is configured to receive a foreign data packet D2 as broadcasted from the foreign broadcast device in radio range to the broadcast device under consideration. This foreign data packet D2 comprises the maximum supported foreign packet protocol version VER2_MAX of the foreign broadcast device or information indicative thereof. Using this information, the broadcast device is configured to identify the capability, e.g. the maximum supported foreign packet protocol version VER2_MAX. This helps the broadcast device to gather information about the capabilities/ maximum supported foreign protocol versions of the foreign broadcast device in range. This improves compatibility.

Then, preferably, the foreign data packet D2 is, similarly to the data packet D1 as discussed above, indicative of information pertaining to a second aircraft, at least when mounted to, affixed at, or situated in or at the second aircraft or a pilot onboard the second aircraft. The broadcast device is configured to calculate a collision probability between the first aircraft and the second aircraft and/or provide information improving situational awareness, e.g. by taking the aircraft positions as comprised in the first and second data packets into account. In general, the situation is assessed depending on the information pertaining to the first aircraft which is available to the broadcast device (own information) and depending on the received information pertaining to the second aircraft (foreign information). Preferably, a collision warning is then issued to the pilot when the collision probability exceeds a certain threshold which helps to decreases the risk of a mid-air collision.

In an advantageous embodiment, the broadcast device is configured to determine the packet protocol version VER1 depending on a previously determined prior packet protocol version, and in particular depending on a series of previously determined prior packet protocol versions. Thus, a history of packet protocol versions of generated and broadcasted (unless RF collisions occur, see below) data packets can be taken into account.

Advantageously, the broadcast device is configured to count a number $m$ of previously unreceivable data packets by the foreign broadcast device. This can be due to the fact that the prior data packet was not broadcasted at all (e.g. due to RF collisions) or it can be due to the fact that the prior data packet had an, for the foreign broadcast device, unsupported packet protocol version, i.e. VER1 > VER2_MAX. Then, the broadcast device is configured to determine the packet protocol version VER1 of the data packet D1 depending on this number $m$ of previously unreceivable data packets by the foreign broadcast device.

In an advantageous embodiment, the broadcast device is configured to derive a desired client update interval $t_{cli}$ for the foreign broadcast device. This desired client update interval $t_{cli}$ is indicative of how many data packets with a supported packet protocol version the foreign broadcast device is allowed to "miss". The broadcast device is further configured to determine the packet protocol version VER1 of the data packet D1 depending on this desired client update interval $t_{cli}$. For example, if the desired client update interval is well met, i.e. all or most of the prior data packets that have been sent are supported by the foreign broadcast device, the packet protocol version VER1 can be safely set to a - for the foreign broadcast device - unsupported higher protocol version, e.g. implementing additional features. This might lead to a slower update rate for the specific foreign broadcast device but favor other (e.g. newer) foreign broadcast devices in range which do support the data packet with the higher packet protocol version and thus benefit from additional features.

Then, the broadcast device is advantageously configured to derive this desired client update interval $t_{cli}$ depending on at least one of

- a distance between the broadcast device and the foreign broadcast device,
- an approach rate of the foreign broadcast device,
- metadata of the foreign broadcast device such as the type of foreign aircraft, and
- the maximum supported foreign packet protocol version VER2_MAX of the foreign broadcast device.

Thus, the desired client update interval can be dynamically adapted to the current situation in the population of sending and receiving broadcast devices which enhances safety and functionality.

Then, advantageously, the broadcast device is configured to derive a send gap g for the foreign broadcast device which is depending on a discrepancy between the number of unreceivable data packets m (see above) and the desired client update interval $t_{cli}$ (see above). The broadcast device is further configured to determine the packet protocol version VER1 of the data packet D1 depending on the send gap g. This way, it is easier to determine if the desired client update interval is met or not.

In another advantageous embodiment, the broadcast device is configured to maintain a list of all foreign broadcast devices in radio range to the broadcast device under consideration. This list is indicative of the capability, in particular of the maximum supported foreign packet protocol version, of each foreign broadcast device. The broadcast device is further configured to determine the packet protocol version VER1 of the data packet D1 depending on said capability, in particular said maximum supported foreign packet protocol version of each of said foreign broadcast devices. Thus, compatibility between the broadcast devices is improved because the capabilities of all foreign broadcast devices are taken into account when determining the packet protocol version to broadcast next.

Preferably, the broadcast device is configured to generate the data packet D1 in such a way that it comprises a header section and a payload section. In particular the header section is non-encrypted and/or the payload section is encrypted, e.g. by means of a symmetric or an asymmetric (e.g. public/private key) cryptographic algorithm. Thus, parts of the data packet D1 can be received and read by anyone while other parts of the packet can only be read by authorized receivers. This enhances security.

Then, advantageously, the payload section of the data packet D1 is encrypted by means of a symmetric cryptographic algorithm (e.g. AES with a key size of, e.g. 128 bits) and, in particular, the broadcast device is configured to use a cryptographic nonce depending on the header section of the data packet D1, on a time stamp, and on a secret constant for encrypting the payload section of the data packet D1. Thus, security is further enhanced, because, e.g. the cryptographic nonce contains the changing time stamp and the variable data packet header which renders replay attacks not feasible.

In yet another preferred embodiment, the broadcast device is configured to generate the data packet D1 in such a way that it comprises a timestamp, in particular in the (e.g. encrypted) payload section of the data packet.

This makes it possible to implement additional features for enhancing functionality, e.g. for message relaying.

In an advantageous embodiment of the invention, the broadcast device is configured to,

- repeatedly determine an updated position P1 of the broadcast device by means of the positioning device,
- repeatedly determine an updated packet protocol version VER1 of an updated data packet D1, and
- repeatedly generate and broadcast the updated data packet D1 comprising the updated position P1 and the updated packet protocol version VER1. Also here, the updated data packet D1 is generated based on the updated packet protocol version VER1, i.e. according to the rules, comprised values, and semantics of the updated packet protocol version.

In particular, any time interval between two of such consecutive updates (i.e. determining the updated position P1, determining the updated packet protocol version VER1, and generating and broadcasting the updated data packet D1) is between 0.1 s and 5 s, in particular is between 0.5 s and 1 s, and in particular is 1 s.

Please note here that the update frequencies for the updated positions P1 and for the updated packet protocol version VER1 can be the same or they can differ. Please further note that both time intervals (i.e. the one for position updates and the one for determining the updated packet protocol version) can be fixed or variable independently from each other, i.e. they do not need to be constant over time.

Then, the broadcast device is advantageously configured to

- determine the updated position P1 once for every time frame, e.g. once every 1 s;
- determine the updated packet protocol version VER1 once for every transmit-window of the time frame, e.g. once every 0.5 s (for 2 transmit-windows per time frame); and
- generate and broadcast the updated data packet D1 once in every transmit-window of the time frame.

Then, a first updated data packet in the first transmit-window comprises the updated position P1 of the broadcast device determined for the time frame. Further, the first updated data packet comprises and is generated based on a first determined updated packet protocol version VER1 valid for the first transmit-window. A second updated data packet in the second transmit-window comprises the same updated position P1 of the broadcast device as the first updated data packet but it comprises and is generated based on a second determined updated packet protocol version VER1 which is valid for the second transmit-window. The first and second updated packet protocol versions can be the same but they usually differ as described above.

As an example, the position P1 is determined once a second (e.g. for a time frame duration of 1 s) and the updated packet protocol version is determined twice a second (e.g. for a transmit-window duration of 0.5 s, i.e. two transmit-windows per time frame). Then, an updated data packet D1 is sent at a frequency of 2 Hz, i.e. the nominal transmit rate is 2 Hz. All data packets D 1 in a single time frame comprise the same updated position P1 which is valid/ determined for this time frame but they can differ in their packet protocol versions VER1, e.g. depending on the desired client update intervals $t_{cli}$ or the send gap g for all foreign broadcast devices in radio range as discussed above. As an example, the updated data packet D 1 in the second transmit-window can have a lower packet protocol version than the updated data packet D1 in the first transmit-window of the time frame to meet the desired send gap g. Thus, compatibility between different broadcast devices is enhanced.

In another advantageous embodiment, the broadcast device is configured to generate the data packet D 1 in such a way that it comprises a pair c = (e, m) with an exponent e being a natural number and with a mantissa m being a natural number. This pair or code point c is indicative of a value v (e.g. including a rounding of the value v), which can be a floating point or a natural number. The mantissa m has a bit width of $N_m$ (e.g. 7) and the exponent e has a bit width of $N_e$ (e.g. 2). Then, $v = 2^e * (2^{Nm} + m) - 2^{Nm}$. According to the invention, the bit widths $N_m$ and $N_e$ are selected such that a total bit width $N = N_e + N_m$ of the pair c is smaller than a total bit width of the value v. Thus, bandwidth is saved which enables the broadcasting of further information and/or at higher update rates.

As another aspect of the invention, a method for, by means of a broadcast device, in particular as discussed above with regard to the first aspect of the invention, wirelessly broadcasting information pertaining to a first aircraft comprises steps of:

- providing the broadcast device comprising a positioning device, a control unit, and a radio transmitter, advantageously mounted or mountable to, affixed or affixable at, or situated or situatable in or at the first aircraft or a pilot onboard the first aircraft, and
- by means of the positioning device (e.g. a GNSS receiver such as a GPS receiver, a GLONASS receiver, a Galileo receiver and/or a combined positioning device taking into account information from onboard navigational systems, see above) determining a position P1 (advantageously comprising a latitude, a longitude and an altitude) of the broadcast device.

The method comprises a further step of, by means of the control unit, receiving the position P1 as determined by the positioning device, preferably via an internal bus such as a serial or an I2C bus. Thus, the control unit can further process the position P1, e.g. add it to a to-be-broadcasted data packet D1 (see below).

In addition, the method comprises a step of (advantageously repeatedly for each data packet, see below) generating the data packet D1 comprising the received position P1, comprising an identifier ID1 of the broadcast device, comprising a packet protocol version VER1 of the data packet D1, and comprising a maximum supported packet protocol version VER1_MAX of the broadcast device. The term "comprising" is to-be-understood in such a way that the mentioned information or values indicative thereof are comprised in the data packet D1.

The data packet D1 is generated based on the determined packet protocol version VER1. The term "based on" is to be understood in a way that the data packet D1 is generated according to the rules, comprised values, and semantics of the respective packet protocol version.

Please note that further information can optionally be determined by the positioning device and/ or generated by the control unit, e.g. ground speed, course/track, climb rate, acceleration, turn rate, movement mode, horizontal position accuracy, vertical position accuracy, velocity accuracy, a future flight trajectory as computed from the current position P1 and velocity and/or acceleration and/ or wind vectors, etc. These further information or values indicative thereof can then be added to the data packet D1 which improves the calculation of collision probabilities and/or situational awareness.

According to the invention, the method comprises a further step of

- by means of the radio transmitter receiving the generated data packet D1 (e.g. via an internal bus) and wirelessly broadcasting the received data packet D1, e.g. to ground based receiver stations and/or to adjacent aircraft. The broadcasted data packet D1 is indicative of the to-be-broadcasted information pertaining to the first aircraft. Thus, a receiver of the data packet D1 can reconstruct the position P1 and - using these values - e.g. calculate a collision probability and - based thereon - putatively issue a warning to the pilot. This enhances the safety of the aircraft(s) and/or overall situational awareness.

Advantageously, the method comprises a further step of (e.g. by means of the control unit) determining the packet protocol version VER1 of the data packet D1 depending on a capability (advantageously on a maximum supported foreign packet protocol version VER2_MAX) of a foreign broadcast device which is in radio range to the broadcast device under consideration. Then, the data packet D1 is generated based on the determined packet protocol version VER1.
This enables the broadcast device to "talk" to the foreign broadcast device "in an understandable language", e.g., with a lower packet protocol version than the maximum supported packet protocol version VER1_MAX, which improves compatibility between the broadcast devices.
In an advantageous embodiment, the method comprises a further step of

- by means of a radio receiver of the broadcast device receiving a foreign data packet D2 as broadcasted from the second broadcast device in radio range to the broadcast device under consideration. This foreign data packet D2 comprises the maximum supported foreign packet protocol version VER2_MAX of the foreign broadcast device or information indicative thereof. This helps the broadcast device to gather information about the capabilities/maximum supported foreign protocol versions of nearby foreign broadcast devices.

In another advantageous embodiment of the method, it comprises further steps of

- counting a number m of previously unreceivable data packets by the foreign broadcast device (this can be due to the fact that the prior data packet was not broadcasted at all, e.g. due to RF collisions, or it can be due to the fact that the prior data packet had an unsupported packet protocol version, i.e. VER1 > VER2_MAX);
- deriving a desired client update interval $t_{cli}$ for the foreign broadcast device, in particular depending on at least one of

    * a distance between the broadcast device under consideration and the foreign broadcast device,
    * an approach rate of the foreign broadcast device,
    * metadata of the foreign broadcast device, and
    * the maximum supported foreign packet protocol version VER2_MAX of the foreign broadcast device.

Thus, the desired client update interval can be dynamically adapted to the current situation in the population of sending and receiving broadcast devices which enhances safety and functionality.
The method in this advantageous embodiment comprises a further step of

- deriving a send gap g for the foreign broadcast device depending on a discrepancy between the number of unreceivable data packets m and the desired client update interval $t_{cli}$.

Then, the packet protocol version VER1 of the data packet D1 is determined depending on this send gap g. This way, it is easier to determine if the desired client update interval is met or not.
In another advantageous embodiment, the method comprises a further step of

- maintaining a list of all foreign broadcast devices which are in radio range to the broadcast device under consideration.

This list is indicative of the maximum supported foreign packet protocol version of each of the foreign broadcast devices. The packet protocol version VER1 of the data packet is then determined depending on the maximum supported foreign packet protocol version of each of said foreign broadcast devices. Thus, compatibility between the broadcast devices is improved because the capabilities of all foreign broadcast devices are taken into account.
As another aspect of the invention, a computer program product comprises instructions to cause a device as described above with regard to the first aspect of the invention to execute the steps of a method as described above with regard to the second aspect of the invention.
This computer-program product is - according to another aspect of the invention - stored on a computer-readable medium. It can then be read by a device as discussed above with regard to the first aspect of the invention and it can cause the device to execute the steps of a method as described above with regard to the second aspect of the invention.
As yet another aspect of the invention, a use of a broadcast device as discussed above with regard to the first aspect of the invention at a first aircraft (or a pilot onboard the first aircraft such as a paraglider pilot wearing a variometer/RCDI device implementing the functionality as discussed above with regard to the first and second aspects of the invention) for wirelessly broadcasting information pertaining to the first aircraft is disclosed, in particular for collision avoidance and/or improved situational awareness. This improves compatibility thus enabling efficient collision avoidance and/or situational awareness functionality.

As yet another aspect of the invention, a system for aircraft collision avoidance comprises

- a first broadcast device as discussed above with regard to the first aspect of the invention at a first aircraft (or pilot) for wirelessly broadcasting information pertaining to the first aircraft, and
- a second broadcast device as discussed above with regard to the first aspect of the invention at a second aircraft (or pilot) for wirelessly broadcasting information pertaining to the second aircraft.

Thus a collision probability between the first aircraft and the second aircraft is easier to derive, e.g. by taking the information pertaining to the first and second aircraft into account. Preferably, a collision warning is then issued to the pilot when the collision probability exceeds a certain threshold which helps to decreases the risk of a mid-air collision. This improves overall safety and/or situational awareness.

Brief Description of the Drawings

The invention will be better understood and objects other than those set forth above will become apparent when consideration is given to the following detailed description thereof. Such description makes reference to the annexed drawings, wherein:

Figs. 1a-1c show the principle of Extended Range Encoding (ERC),
Figs. 2 - 4 show the principle of Adaptive Coordinate Truncation (ACT),
Fig. 5 shows a broadcast device 10 according to the invention and a display unit 18, the broadcast device 10 comprising a positioning device 11, a control unit 12, and a radio transceiver 13, 14,
Fig. 6 shows a system for aircraft collision avoidance comprising a first broadcast device 10 at a first aircraft 1, a second broadcast device 20 at a second aircraft 2, a third broadcast device 30 at a paraglider pilot, and a ground based receiver station 40, and
Fig. 7 shows a diagram visualizing the timing and information for determining the packet protocol version VER1 of a data packet D1 as generated and broadcasted by the broadcast device 10 of Figs. 5 and 6.

Modes for Carrying Out the Invention

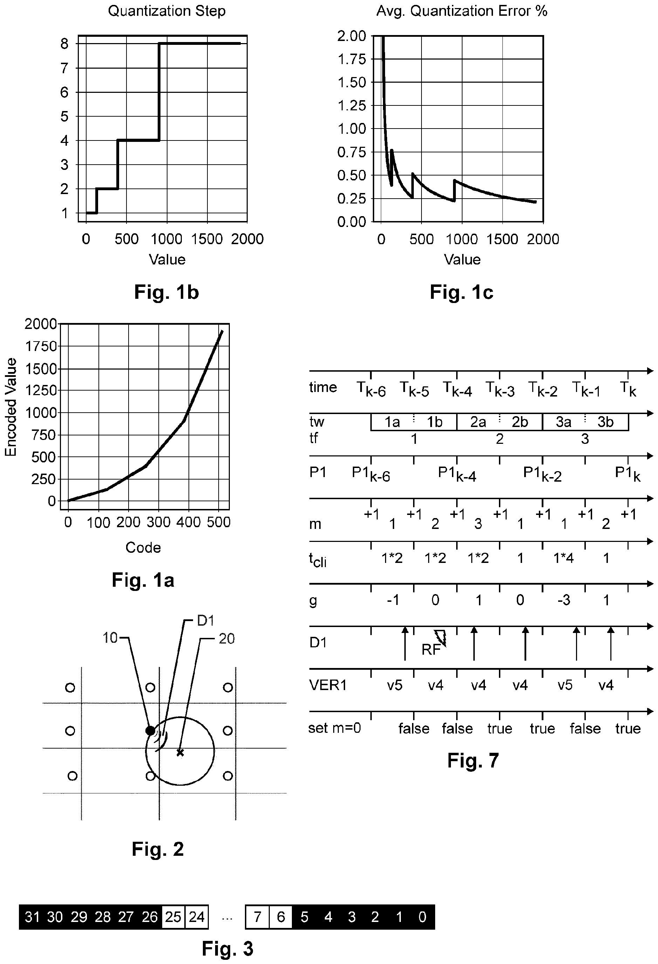

Figs. 1a-1c show the principle of Extended Range Encoding (ERC) as used in an embodiment of the invention. Specifically, in Fig. 1a, it is shown that the encodable value range increases from 0... 511 for a 9 bit integer and for a linear mapping with $2^9-1$ (x-axis) to 0... 1912 for a 9 bit ERC pair with $N_e = 2$, $N_m = 7$ (y-axis, $v_{max}=2^3(2^7 + 127) - 2^7 = 1912$ with $e = 2^2-1$ and $m = 2^7-1$). In Fig. 1b, it is shown that the absolute resolution decreases (i.e. the quantization step increases) at the values $v = 128$, $v =128+256 = 384$, and $v = 128+256+512 = 896$ (x-axis), respectively. However, as it is shown in Fig. 1c, the relative quantization error (y-axis, the quantization step as shown in Fig. 1b at a given value divided by the value itself) decreases with higher ERC encoded values $v$ (x-axis). See the chapter "AMP Protocol Description", section 2.1 for details.

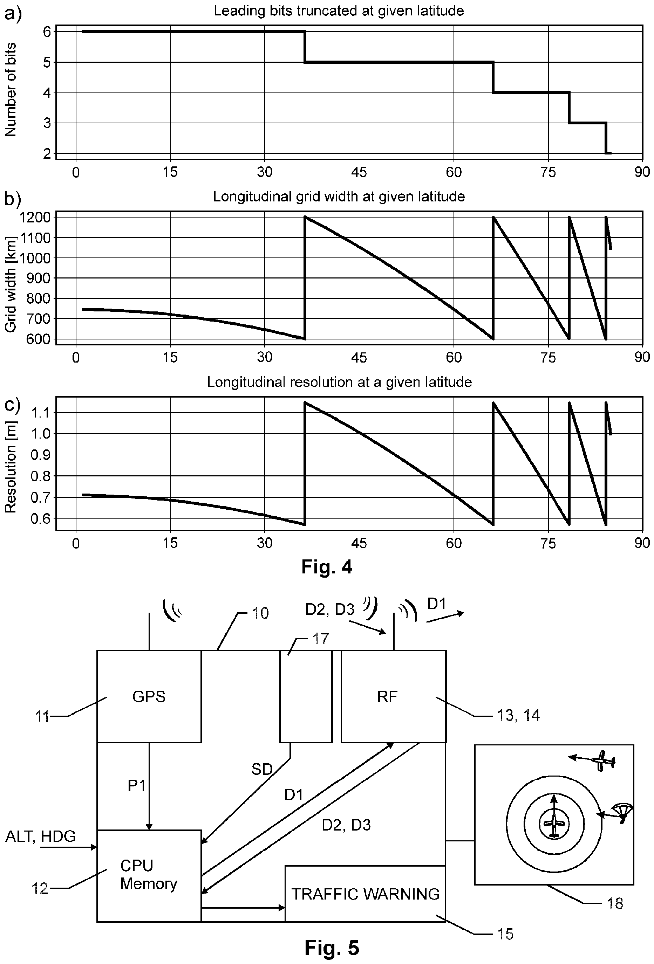

Figs. 2 - 4 show the principle of Adaptive Coordinate Truncation (ACT) as used in an embodiment of the invention, in which a broadcast device 10 transmits its truncated position P1 in a data packet D1 relative to a local grid cell (rectangles) origin. In Fig. 2, a receiver ("x") (e.g. a second broadcast device 20) of a data packet D1 determines the correct position P1 (black solid dot) of the broadcast device 10 by taking proximity considerations due to limited radio range into account. Due to properties of the grid, any of the open dot positions are also mathematically correct and can only be discarded due to the inherent physical proximity of the sender and the receiver. In Fig. 3, the principle of creating the grid by binary truncation is explained. Six leading and six trailing bits (white on black) are removed from a base 32-bit signed integer, and the center 20 bits are transmitted (black on white) as an unsigned integer. The number of deleted trailing bits determines the extent to which resolution is lost, while the number of deleted leading bits determines the grid size or encodable separation due to a reduced encodable value range. The deletion of the trailing bits is performed after rounding to the closest admissible integer. In Fig. 4, the non-uniform grid of ACT is visualized: If a static bit truncation was used, the resulting grid size would contract towards the poles of the earth for the longitude dimension. As a consequence, the longitudinal extent would drop below the radio range at some point; a receiver could then no longer unambiguously determine the sender's position. Conversely, to maintain a sufficient grid size, longitude would require more bits in the transmission. ACT addresses this by dynamically adapting the longitude grid size with higher/ lower latitudes.

The following table (see also Section 2.2 of the chapter "AMP Protocol Description") provides the rule for constructing the longitude grid in an embodiment of the invention:

| Latitude range | # leading bits truncated | # trailing bits truncated | Longitude Resolution |
|---|---|---|---|
| |lat| < 36° | 6 | 6 | 0.0000064° |
| 36° <=|lat| < 66° | 5 | 7 | 0.0000128° |
| 66° <=|lat| < 78° | 4 | 8 | 0.0000256° |
| 78° <=|lat| < 84° | 3 | 9 | 0.0000512° |
| 84° <=|lat| | 2 | 10 | 0.0001024° |

The resulting resolution and grid sizes are shown in Fig. 4: In the top part (panel a), the number of truncated leading bits is shown as a function of the latitude in degrees; the closer the broadcast device gets to the poles (i.e. the more the latitude increases), the less leading bits are truncated from the longitude data. In the middle part (panel b) of Fig. 4, the resulting longitudinal grid size in km as a function of the latitude in degrees is shown, and in the lower part (panel c) the longitudinal resolution in m as a function of the latitude in degrees.

Fig. 5 shows a schematic view of a broadcast device 10 according to the invention as well as a display unit 18. The broadcast device 10 comprises a positioning device 11, a control unit 12 with memory, and a radio transceiver 13, 14. The broadcast device 10 is mounted at a first aircraft 1 (not shown) and receives pressure altitude (ALT) and heading (HDG) data from onboard navigation systems. The positioning device 11 (GPS) is configured to determine a three-dimensional position P1 of the broadcast device/ of the aircraft 1 once for every time frame of 1 s. The control unit 12 (CPU) is configured to receive (via an internal serial bus) the position P1 as determined by the positioning device 11 and fuse the received GPS altitude data with the received pressure-based altitude data to improve altitude precision.

A transmit-window starts at each time $T_k$ with k being a positive, non-zero natural number. In every transmit-window of 0.5 s duration, the control unit 12 determines a packet protocol version $VER1_k$ of a data packet D 1 which is to-be-broadcasted within the transmit-window. The packet protocol version $VER1_k$ is determined depending on a maximum supported foreign packet protocol version VER2_MAX, VER3_MAX of foreign broadcast devices 20, 30 (not shown) in radio range to the broadcast device. VER2_MAX, VER3_MAX are received as part of foreign data packets D2, D3 as broadcasted from the foreign broadcast devices (see below).

Specifically (also see the chapter "AMP Protocol Description", section 2.4 for additional details), the broadcast device 10 counts a number m of previously unreceivable data packets by the foreign broadcast devices 20, 30. For this, the broadcast device 10 maintains and updates a list of all foreign broadcast devices 20, 30 in radio range to the broadcast device 10. This list is in addition indicative of the maximum supported foreign packet protocol versions VER2_MAX, VER3 _MAX of each of the foreign broadcast devices 20, 30.

In addition, a desired client update interval $t_{cli}$ is derived for each of the foreign broadcast devices 20, 30 depending on

- a distance D between the broadcast device 10 and the foreign broadcast device 20, 30,
- an approach rate of the foreign broadcast device 20, 30, and
- metadata M such as a vehicle type of the foreign broadcast device 20, 30.

Then, a send gap g is derived for each of the foreign broadcast devices 20, 30 depending on a discrepancy between the number of unreceivable data packets m and the desired client update interval $t_{cli}$. If this send gap g is 0 or higher (i.e. if the desired client update interval is not fulfilled), then the packet protocol version $VER1_k$ is determined such that the foreign broadcast devices 20, 30 are able to parse the data packet D 1, i.e. VER1 <= min (VER2_MAX, VER3_MAX).

As a next step, the data packet D 1 is generated. The data packet D 1 comprises the received position P 1, heading HDG, an identifier ID1 of the broadcast device stored in non-volatile memory, the determined packet protocol version VER1, and a maximum supported packet protocol version VER1_MAX of the broadcast device 10. The data packet D1 is generated based on the determined packet protocol version VER1 such that it respects the rules, comprised values and semantics of the determined packet protocol version VER1.

In the described embodiment, this is all done in software (i.e. as a computer program product stored in a flash memory of the control unit) running on the control unit 12, although outsourcing certain operations to dedicated hardware units (e.g. for encryption/decryption) is possible as well. Acceleration data SD originating from an accelerometer 17 of the broadcast device 10 serves to augment the position P1. The data packet D1 is then sent via another internal serial bus to the radio transceiver 13 (RF) which wirelessly broadcasts the received data packet D1 (undirected transmission, non-connection based). The data packet D1 is indicative of the to-be-broadcasted information (ID1, truncated latitude, truncated longitude, altitude, aircraft type, ground track/ heading, ground speed as calculated from position updates, climb rate as calculated from altitude updates, turn rate as calculated from heading updates, movement mode, time and other, see sections 3.1.1 and 3.1.2 of the "AMP Protocol Description" for a list).

The data packet D1 comprises a header section and a payload section, wherein the header section is non-encrypted and wherein the payload section is encrypted by the AES algorithm with a key size of 128 bits (see the chapter "AMP Protocol Description", section 3.2 for details). In the header section, the data packet D1 comprises the identifier ID1 as well as the determined packet protocol version VER1 and the maximum supported packet protocol version VER1_MAX of the broadcast device 10.

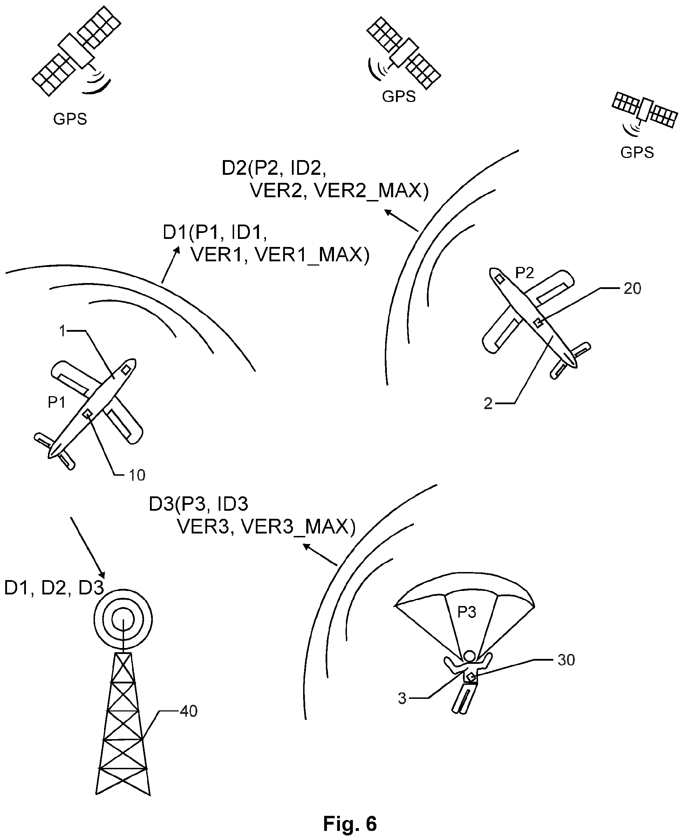

In addition to broadcasting the data packets D1, the radio transceiver 13, 14 (RF) also acts as a radio receiver 14 for receiving foreign data packets D2, D3 as broadcasted from the foreign broadcast devices 20, 30 (see Fig. 6). Such foreign data packets D2, D3 are - in addition to the maximum supported foreign packet protocol versions VER2_MAX, VER3_MAX - indicative of information pertaining to second/third aircraft 2, 3 (see Fig. 6), and the broadcast device 10 is configured to calculate a collision probability between the first aircraft 1 and the second/third aircraft 2, 3 depending on the information pertaining to the first aircraft 1 and depending on the received information pertaining to the second/third aircraft 2, 3.

If the collision probability exceeds a certain threshold, a collision warning ("TRAFFIC WARNING") is issued to the pilot by means of an audiovisual display 15 of the broadcast device 10. This enhances the safety. A separate display unit 18 helps to improve the pilot's situational awareness by displaying the first ("own") aircraft 1 in the center of three circles and the second/third ("foreign") aircraft 2, 3 with their courses and velocities (arrow lengths, not to scale), also see Fig. 6. The display unit 18 can also be part of the broadcast device 10 (not shown).

This enables the use of the broadcast device 10 for collision avoidance with an improved situational awareness as well as the creation of a system for aircraft collision avoidance comprising a first broadcast device 10 at a first aircraft 1, a second broadcast device 20 at a second aircraft 2, and a third broadcast device 30 at a paraglider pilot. Such a system is shown in Fig. 6. The first aircraft 1 at position P1 is equipped with a broadcast device 10 as described above. The second aircraft 2 at position P2 is equipped with a broadcast device 20 which is - except for a different identifier ID2 - the same as the broadcast device 10 as described above. The third aircraft 3 (paraglider and pilot) at position P3 is equipped with a broadcast device 30 which is similar to the broadcast devices 10 and 20 as described above. As a difference to these, however, this foreign broadcast device 30 cannot receive data packets and therefore broadcasts a predefined value for its own maximum supported packet protocol version VER3_MAX, signaling to receiving broadcast devices 10, 20 to ignore this broadcast device 30 in the determination of VER1, VER2.

A non-sending/receiving-only ground-based receiver station 40 has no means to publish its maximum support packet protocol version VER4_MAX. It is expected that it supports all currently used protocol versions. As it is usually connected to the internet, updating its software to work with higher protocol versions is simple.

The first broadcast device 10 wirelessly broadcasts information pertaining to the first aircraft 1 (including its identifier ID 1 and its maximum supported packet protocol version VER1_MAX) in the form of data packets D1. The second broadcast device 20 wirelessly broadcasts information pertaining to the second aircraft 2 (including its identifier ID2 and its maximum supported packet protocol version VER2_MAX) in the form of data packets D2. The third broadcast device 30 wirelessly broadcasts information pertaining to the third aircraft 3 (including its identifier ID3 and the predefined value as its maximum supported packet protocol version VER3_MAX) in the form of data packets D3.

Because the first broadcast device 10 receives the data packets D2, D3 as broadcasted from the second and third broadcast devices 20, 30 (and vice versa, except for the third broadcast device 30), a collision probability is easier to derive by taking the information pertaining to the first, second, and third aircraft 1, 2, 3 into account. This enhances safety and the pilots' situational awareness. Due to the invention with its dynamic adaptation of packet protocol versions, compatibility is enhanced, even if some of the broadcast devices cannot support the latest packet protocol version, e.g. due to limited hardware resources or missed firmware updates.

Fig. 7 shows a diagram visualizing the timing and information for determining the packet protocol version VER1 of the data packet D1 by the broadcast device 10 of Figs. 5 and 6. In this embodiment, it is assumed that the foreign broadcast device 20 can parse data packet protocol v4 but not v5. This is published as VER2_MAX=v4 in data packets D2 from the foreign broadcast device 20 and it is therefore known by the broadcast device 10. The maximum supported packet protocol version of the broadcast device 10 is v5, i.e. VER1_MAX = v5.

As it is shown in the timelines "time", "time frame tf"/"transmit-windows tw", and "P1" of Fig. 7, the broadcast device 10 determines its positions $P1_{k-6}$, $P1_{k-4}$, $P1_{k-2}$, $P1_k$ at the times $T_{k-6}$, $T_{k-4}$, $T_{k-2}$, and $T_k$, respectively. The position update rate is 1 Hz. The positions are valid for the whole respective time frames tf=1, 2, and 3, i.e. for 1 s each. At the beginning of each transmit-window tw=1a, 1b, 2a, 2b, 3a, 3b, i.e. at times $T_{k-6}$, $T_{k-5}$, $T_{k-4}$, $T_{k-3}$, $T_{k-2}$, $T_{k-1}$ and $T_k$, respectively with a duration of 0.5 s each, the number m of previously unreceivable data packets for foreign broadcast device 20 is incremented by 1, i.e. m = m + 1. The desired client update interval $t_{cli}$ for the foreign broadcast device 20 is assumed to be 1 (aircraft type "other") with an active multiplier 2 in tw=1a-2a due to vertical separation and with an active multiplier 4 in tw=3a due to horizontal and vertical separation (see the "AMP Protocol Description" for details). A $t_{cli}$=1 is active in tw=3b due to a collision course with an expected approach time in less than 30 sec. The discrepancy between m and

$t_{cli}$ is used to derive the send gap g for the foreign broadcast device 20. Specifically, if a send gap g reaches 0 or higher, a fallback data packet (i.e. a data packet D1 with a supported data packet protocol version) is broadcasted. The vertical arrows in the "D1" line show a data packet D1 being broadcasted with the VER1 packet protocol version. Then, the following values result for VER1 = VER2_MAX if g >= 0 or VER1 = VER1_MAX if g < 0:

```
tw=1a: m=1, t_cli=2, g=-1, VER1=v5, set m=0 because VER1<=VER2_MAX?: false
tw=1b: m=m+1=2, t_cli=2, g=0, VER1=v4, RF collision, set m=0?: false
tw=2a: m=3, t_cli=2, g=1, VER1=v4, set m=0?: true
tw=2b: m=1, t_cli=1, g=1, VER1=v4, set m=0?: true
tw=3a: m=1, t_cli=4, g=-3, VER1=v5, set m=0?: false
tw=3b: m=2, t_cli=4, g=-2, VER1=v5, set m=0?: false
```

At the end of each transmit-window, m is set to zero if a supported data packet D 1 was successfully sent.

Please note here that only the interaction between the broadcast device 10 and the foreign broadcast device 20 is shown. The same principles apply for the foreign broadcast device 30 at the paraglider pilot with the exception that VER3_MAX=PREDEFINED_VALUE due to the foreign broadcast device 30 being sent-only. Thus, $t_{cli}$ is set to 20 for the foreign broadcast device 30 thus effectively removing it from consideration in terms of packet protocol versions.

Definitions:

Throughout the application documents, the term "aircraft" relates to all VFR-operated or VFR-operatable manned and teleoperated or automated unmanned flying or flyable objects such as gliders, towplanes, helicopters, parachutes, dropplanes, hanggliders, paragliders, single-engine piston planes, multi-engine piston planes, jet planes, (hot air) balloons, airships (such as, e.g. blimps), and UAVs (unmanned aerial vehicles such as drones).

The term "pilot" refers to either the human on board the aircraft or on the ground or on board another aircraft and supervising or piloting the aircraft from a distance. Additionally, in the case of fully automated systems, the term "pilot" may refer to, e.g. a flight control system.

The term "broadcast" relates a method of transferring a message (or here, the data packet) from a single transmitter to all recipients within radio range simultaneously, e.g. non-connection based. This is in contrast a point-to-point (e.g. connection or link-based) method in which a single sender communicates with a single receiver. Whenever the term "transmitter" or "sender" is used, it shall relate to "broadcaster".

Aircraft Motion Prediction (AMP) Protocol Description

*1. Introduction*

This section describes a possible implementation of the Aircraft Motion Prediction (AMP) Protocol, i.e. the structure and generation of a data packet used for the invention. All information in this section is to be treated in a non-limiting manner but as examples/ advantageous embodiments only. The AMP Protocol enables the following applications:

- Situation awareness
- Traffic monitoring
- Collision avoidance
- Tracking
- Identification

The following description omits the description of the physical and data link layers, as they are implemented by standard electronic components which are known to the skilled person (e.g. nRF905 from Nordic Semiconductors).

*1. 1. Coordinates Datum*

The WGS-84 standard is used throughout. Elevation is referenced to the WGS-84 ellipsoid surface (i.e. not the geoid, not MSL). Longitude and latitude are encoded in degrees, scaled 1E-7. South and West are negative.

*1.2. Timing and Synchronization*

To support a large number of broadcast devices, radio access is organized in time frames. A single time frame has a duration of, e.g. 1 s. Global time is available to any broadcast device via the positioning device. The number of data packets a broadcast device is allowed to send per time frame (i.e. the duty cycle) is regulated by law (e.g. 1% over one hour). All data packets per time frame have the same information contents (such as position, speed etc.) but can differ in timestamp, protocol version used, etc. (see section 2.4 below).

Transmission are organized in a plurality of transmit-windows per single time frame such that a single data packet is transmitted per transmit-window. As an example, with 1 sec time frames and 2 transmit-windows per time frame, the broadcast device nominally transmits a data packet once in each of these two transmit-windows. The nominal transmit/update rate is thus 2 data packets per second in this example.

Send timing is random within the transmit-window. If a packet collision is detected, a broadcast device retries after a random time delay. If the transmit-window ends before a successful transmission is made, the data packet is lost.

## 2. Algorithms and Methods

### 2.1. Extended Range Encoding

Extended Range Encoding (ERC) is a nonlinear encoding technique to encode a value with a large input range efficiently, using less bandwidth (bits) compared to a simple linear encoding. Due to the nonlinearity of the approach, it sacrifices (absolute) resolution at higher values (i.e. it utilizes a larger quantization interval), but achieves a much larger value range. The relative resolution (i.e. the ratio between the quantization interval and the encoded value) can be tuned to suit the intended application.

The method is comparable to floating point representations. The difference is that ERC uses integers and is flexible to adjust to the individual values and fields in the AMP protocol. ERC is parametrizable:

- Total number of bits N to use for code points (i.e. ERC representation of a numerical value v)
- Number of bits $N_m$ to use for mantissa m, and, derived from N and $N_m$, the number of bits $N_e$ to use for the exponent e.
- Whether negative values v are allowed, or only non-negative. Signed values are encoded by using the most significant bit of the exponent as a minus sign.
- A linear scaling factor A for every field representing the physical unit/ resolution for the encoded numerical value

Assume the pair c = (e, m) is a code point indicative of a to-be-transmitted value v, the code point comprising an exponent e and a mantissa m. Both e and m are non-negative integers, while v is a non-negative real number with a physical unit determined by the scaling factor A. The mantissa m has a bit width of $N_m$. The total bit with of c is N, thus the bit width of the exponent e is $N_e = (N-N_m)$.

For better readability, v* is defined as v* = ROUND(v / A) as the result of the value divided by the scaling factor, rounded to the nearest integer. Conversely, let v = A * v*. Then, the numerical input value v encoded by code point c is given by:

$$v^* = 2^e * (2^{Nm} + m) - 2^{Nm}$$

$$v = A * v^*$$

The reverse operation for computing c = (e, m) from v is defined by the following algorithm:

1. Let v* = ROUND(v/A)
2. Compute the exponent: Find the largest e from the set of integers 0... ($2^{Ne}$ - 1) that satisfies

$$v^* >= 2^{Nm} (2^e - 1)$$

3. Compute the mantissa:

$$m = (v^* + 2^{Nm}) / 2^e - 2^{Nm}$$

The code point c = (e, m) can be represented as the binary concatenation of the exponent e and the mantissa m, yielding the binary representation of c:

$$c_{binary} = e << N_m \mid m$$

where "|" denotes the "bitwise OR" operation and "<<" the "shift left" operator.

An example for $N_e = 2$, N = 9 yields:

- The encodable value range increases from 0... 511 (for a 9 bit integer and for a linear mapping with $2^9-1=511$) to 0... 1912 (for a 9-bit ERC mapping with $N_e = 2$, $N_m = 7$, and with $v_{max} = 2^3 (2^7 + 127) - 2^7 = 1912$ with $e = 2^2-1$ and $m = 2^7-1$), see Fig. 1a.

- The absolute resolution decreases (or the quantization interval increases) at v = 128, v =128+256, v = 128+256+512 = 896 and so forth, see Fig. 1b.

- The relative quantization error (i.e. the quantization step divided by the encoded value) decreases with higher ERC encoded values v, see Fig. 1c.

The parametrization in N, $N_e$ therefore defines the range of encodable values v and how quickly the resolution degrades with larger values. In addition to these parameters, the AMP protocol also applies a linear scaling A to every field which defines the physical unit/ resolution for the encoded numerical value v (e.g. 0.1 m/s for ground speed).

*2.2. Adaptive Coordinate Truncation*

Adaptive Coordinate Truncation (ACT) is a system to reduce the required bandwidth for transmitting the 2D position, exploiting that sender and receiver are necessarily local due to radio range limitations.

*2.2.1. Broadcasting ACT*

To transmit positions P1, the WGS-84 geodesic system is used. The base units are longitude and latitude, scaled to 1E-7° (pre truncation). Signed integers are used, north and east are positive, respectively. Altitude is relative to the ellipsoid (i.e. not the geoid) and not truncated, i.e. not part of this algorithm.

In ACT, the WGS-84 coordinate space is divided into grid cells, where the grid dimension is chosen to be well larger than the maximum expected radio range. A sender transmits its position relative to the local grid cell origin. A receiver can determine the grid cell that results in the lowest distance to the sender. By the principle of locality, this must then be the true solution, since other solutions are not physically possible due to the radio range.

The situation is depicted in Fig. 2: A receiver ("x") determines the correct position (black solid dot) by proximity. Due to properties of the grid, any of the open dot positions are also correct and can only be discarded due to the principle of locality.

ACT uses a grid that is not uniform: If it were, the effective grid size would contract towards the poles for the longitude dimension. As a consequence, the longitudinal extent would drop below the radio range at some point; a receiver could then no longer unambiguously determine the sender's position. Conversely, to maintain a sufficient grid size, longitude would require more bits in the transmission.

ACT addresses this by dynamically adapting the longitude grid size with higher/ lower latitudes.

The grid is created by binary truncation, which renders the calculations computationally efficient: Starting with a base 32-bit signed integer, a number of bits on the left and right are removed, and only the "center" part is transmitted: In the example in Fig. 3, six leading bits labelled 26... 31 and six trailing bits labelled 0...5 (white on black) are removed from a 32-bit input value, and the center 20 bits labelled 6...25 of the input value are transmitted (black on white). The number of deleted trailing bits determines the amount of lost resolution, while the number of deleted leading bits determine the grid size. The deletion of the trailing bits is performed after rounding to the closest admissible integer, i.e. a rounding up is performed if the most significant truncated bit is set to one. This is done by adding the value of the most significant to-be-truncated bit to the input value prior to trailing bit truncation.

In the specific example of Fig. 3 with six truncated trailing bits, $2^5$ is added to the input value prior to trailing bit truncation which results in a mapping of all original input values to 0, 64, 128, 192, ... after truncation. Negative input values map correctly due to the properties of 2's complement.

ACT uses a minimum grid size of 600 km (well above the radio range of approximately 100 km) and 20 bits (after truncation) for both longitude and latitude. Latitude deletes six leading and six trailing bits, resulting in a latitudinal grid size of approximately 750 km. For longitude, the white block with black text in Fig. 3 (the transmitted bits) is gradually shifted to the left as the sender approaches the poles. The shifts are optimized in a way to ensure a minimum longitudinal grid size (i.e. longitudinal extent of the grid cell) of 600 km.

The following table shows the rule for constructing the longitude grid:

| Latitude range | # leading bits truncated | # trailing bits truncated | Longitude Resolution |
| --- | --- | --- | --- |
| \|lat\| < 36° | 6 | 6 | 0.0000064° |
| 36° <=\|lat\| < 66° | 5 | 7 | 0.0000128° |
| 66° <=\|lat\| < 78° | 4 | 8 | 0.0000256° |
| 78° <=\|lat\| < 84° | 3 | 9 | 0.0000512° |
| 84° <=\|lat\| | 2 | 10 | 0.0001024° |

The resulting resolution and grid sizes are shown in Fig. 4.

*2.2.2. Receiving ACT*

A receiver can perform the following steps when receiving ACT coordinates:

1. Disambiguate latitude from the received truncated latitude data; this can be done due to the fact that the latitude grid (i.e. the latitudinal extent of the local grid cells) is uniform and that the own untruncated latitude data is known to the receiving broadcast device.
2. Determine longitude grid parameters from the table above and from the latitude data as computed in step 1.
3. Disambiguate longitude from the received truncated longitude data, the grid parameters from step 2, and the own untruncated longitude data as known to the receiving broadcast device.

*2.3. Enhanced Privacy Random ID*

To improve the ability to conceal an identity of a broadcast device while maintaining consistency for collision avoidance, the AMP protocol features Enhanced-Privacy Random ID (EPRID).

The method provides a chain of identifiers (IDs) that are broadcasted in a data packet so that signals can be correlated over a short time (continuous reception), but not over a long time (with missed data packets). A broadcast device's ID (i.e. the current identifier $ID_k$ for the time $T_k$) thereby changes randomly over time: A randomly obtained number RON is generated, e.g. by randomly selecting it from a finite set of numbers or randomly generating it, e.g. by means of a true random number generator or some sufficiently seeded pseudo random number generator (PRNG). This RON is then mixed together with the previous identifier $ID_{k-1}$ by means of a cryptographic hash function to generate the current identifier $ID_k$ which is therefore not equal to the previous identifier $ID_{k-1}$. The subsequent randomly obtained number (i.e. $RON_k$) is transmitted as part of the data packet, such that a receiver can - upon receipt of the next data packet - correlate a then received $ID_{k+1}$ to the previously received $ID_k$ without effort. The RON is advantageously chosen from the range $0...2^{Ne} - 1$, where Ne is the number of random bits used for generating the RON.

If a receiver continuously receives at least one data packet per distinct RON/ID pair, then it can readily derive the next ID from this.

However, if a receiver loses one or more data packets, it must start the observation from new since with unknown RON, the new ID cannot be related to the old one. Alternatively, the receiver can try to "guess" the RON. Guessing is rather fast for one or a few missed data packets (only a few bits of randomness were added), but the complexity increases exponentially with the number of bits that need to be guessed. The capability of a receiver to successfully calculate the correct sequence of RONs is effectively limited by two effects:

1. Computational feasibility: Especially when tracking hundreds of targets, e.g. in a wide-area receiver network, or when limited processing power is available, as is often the case in embedded (on-board) systems.
2. Ambiguity: When the number of random bits added (i.e. the amount of randomness introduced by each RON times the number of missed ID-updates) approaches the number of total bits of the ID, the ambiguity increases to the point where a unique reconstruction is no longer possible: There is always a sequence of RONs that generate any given ID from any other.

Example: The random ID has a bit width of 32 bits. An 8 bit value is used for the randomly obtained number RON. Note: The amount of randomness in the RON can be varied, 2 bits are advantageously chosen.

*2.3.1. Prerequisites*

Advantageously, a cryptographic hash function comprising bitwise XOR-/and bitshifting-operations is used for mixing the randomly obtained number $RON_{k-1}$ with the previous identifier $ID_{k-1}$ for generating the current identifier $ID_k$. Such a cryptographic hash function HASH() thus is of the form $ID_k = HASH(RON_{k-1}, ID_{k-1})$. HASH() is deterministic, fast to compute, small changes of the input lead to large changes of the output, and it is computationally infeasible to find the reverse operation.

*2.3.2. Sender*

On the sender, EPRID comprises the following steps:

1. Set k=1, initialize $ID_1$ by choosing a random unsigned 32-bit integer and/or using a fixed value which is e.g. stored in a non volatile memory.
2. At each time $T_k$, randomly choose a $RON_k$ from the set $0...2^{Ne}-1$.
3. Use the pair $(RON_k, ID_k)$ in AMP data packet broadcasts.
4. Advantageously after between 2 and 10 seconds, at time $T_{k+1}$, increment k by 1 and compute the new $ID_k$ from the previous $ID_{k-1}$ and the $RON_{k-1}$:

$$ID_k = HASH(RON_{k-1}, ID_{k-1});$$

5. Go to step 2.

The duration between the ID updates (step 4) and the number of bits to use for the randomness (Ne) can be chosen by the sender to trade off privacy vs. trackability. The default value is 10 s, 1 s is the minimum value. The default value for Ne is 2, the minimum 1, the maximum 8. The broadcast device may adapt the interval in flight. The ID update may happen at any time, but only after the RF time frame is completed.

*2.3.3. Receiver*

The receiver of a packet with a (RON, ID) pair performs the following steps:

1. Initialize an internal memory store for storing a list of (ID, ID') pairs, referenced as ID[i], ID'[i], wherein i is a natural number and refers to the i-th entry in the memory store.

2. When receiving a (RON, ID) pair, check the memory store if an entry i exists with ID = ID[i]. If a match is found, assume the new data packet originates from a known sender with a known current identifier ID. Break.

3. Else, check the memory store if an entry i exists with ID = ID'[i]. If a match is found, assume the new data packet originates from a known sender with an updated current identifier ID and update the memory store entry to (ID, HASH(RON, ID)). Break.

4. Else, assume the new data packet originates from an unknown sender. Add the pair (ID, HASH(RON, ID)) to the memory store.

5. Continue with step 2.

If no matching ID is found in step 3, a receiver may optionally employ a deeper search, i.e. over multiple ID updates, assuming that it has received EPRID-enabled data packets before. This requires a brute-force search. This is feasible mostly for ground-based receivers. Airborne devices for collision avoidance purposes will probably not do this, e.g. due to computational limitations of embedded systems.

*2.4. Dynamic Message Versioning*

Dynamic Message Versioning (DMV) is a method for simplifying data packet protocol updates (e.g., changing the precision, layout, size, or semantics of the contents/values, or modifying other aspects of the broadcasted data packets such as modulation, error correction, encryption, preambel etc.) while eliminating the putative need for a hard firmware expiration mechanism that may be present in prior art broadcast devices: The fundamental nature of such a distributed system as the broadcast devices according to the invention is that all participating nodes/broadcast devices need to understand the updated data packet protocol to retain compatibility. With the mentioned firmware expirations, prior art broadcast devices that did not receive a recent firmware or protocol upgrade stopped operating at a predefined date. Thus, the active firmware and thus data packet protocol versions at any given date could be controlled, allowing a concerted, global protocol update, e.g. once every year. However, this is only possible at the cost of manual user intervention for all devices, which is sometimes cumbersome and expensive, particularly in complex aircraft avionics systems.

DMV-enabled broadcast devices do not require such a firmware expiration mechanism while still allowing the protocol to change and improve, e.g. subject to the capabilities of involved broadcast devices. A DMV-enabled broadcast device can therefore be made backward-compatible indefinitely, i.e. it is then capable of receiving and sending AMP data packets of any (lower) version. This makes an older broadcast device visible to newer ones automatically. For vice-versa visibility, DMV can dynamically balance the use of different versions of the data packet protocol depending on the capabilities of other receiving broadcast devices in the vicinity of the transmitting broadcast device. The maximum protocol version a DMV-enabled broadcast device is capable of receiving, processing, and transmitting is published in the "ver_max" field in the AMP data packet header and is thus transmitted with every AMP data packet (see below). A transmitting broadcast device can then fallback to a lower protocol version if a receiving broadcast device only understands this.

### 2.4.1. DMV Operating Principle

- Every transmitting DMV-enabled broadcast device ("sender") updates and maintains a list of nearby receiving DMV-enabled broadcast devices ("receivers") and their published maximum supported protocol version ( "ver_max"- field in the header section of an AMP data packet, see section 3 .1.1 below). Note that this maximum supported protocol version may deviate from the actual version used in a specific data packet ("ver"-field in the header section of an AMP data packet, see section 3.1.1 below).

- For every AMP data packet that is transmitted, the sender chooses the protocol version ("ver") depending on this list. Heuristics are applied to determine this protocol version used for transmissions, thus maintaining a backward-compatible minimum connectivity with older clients, albeit at a lower update frequency. The parameters used thereby may be dynamically adapted over time: For instance, a lower data packet protocol version may get a higher priority and thus be transmitted more frequently, e.g., at least once every 2 seconds, immediately after a new AMP-protocol release. This allows as many clients as possible to catch up with the respective update. After a transition period, for example after 4 to 8 weeks, the use of lower-versioned AMP data packets may gradually be reduced, e.g., to at least once every 6 seconds.

- The most compatible protocol version is 0, compatible with all DMV-enabled and possibly even prior art broadcast devices that are not DMV-enabled. A base rate (e.g. once every 15 seconds) of protocol 0 data packets can be used to remain compatible indefinitely.

### 2.4.2. Implementation

In this section, the DMV-enabled broadcast device under consideration is denoted as "host" and nearby DMV-enabled broadcast devices are referred to as "clients". This section explains how the host selects the protocol version for broadcasting data packets depending on data packets received by the host from the clients.

Note that both roles (host and client) are usually present in any DMV-enabled broadcast device, such that this rule applies symmetrically for every client as well. Non-senders (e.g. ground-based receiver stations) have no means to publish their DMV-capabilities. It is expected that these are updated frequently and/or support the latest protocol version at any time or at least with a short delay after a protocol/firmware update becomes available. Non-receivers (e.g. paraglider beacons) can transmit a predefined value for "ver max", thus indicating that they cannot receive data packets. Thus, they can then be excluded from DMV.

Let i be an index for the list of received AMP clients, as stored in the host's memory, with i being a non-zero natural number and i = 1...Nc with Nc being the total number of clients from which data packets are received. Clients from which no data packets are currently received are removed from this list. Let then "ver_max$_i$" be a client's maximum supported AMP protocol version, as last received in the header section of a data packet sent by the client i. Hereby, it is assumed that "ver_max$_i$" does not change over time of operation of client i, i.e. during broadcasting of data packets.

This is because firmware and thus protocol updates are usually not performed during operation of the broadcast device.

Let m[i] then be the count of missed (i.e. unreceivable) data packets for each client i, i.e. data packets that the respective client i cannot have received (e.g. due to the data packet not being sent) or data packets that the respective client i cannot have parsed (e.g. due to the data packet having a "ver" > "ver_max$_i$"). This number-count m[i] is derived at the nominal AMP transmit or update rate taking transmit-windows into account: In other words, if the host deliberately does not send a data packet at all (e.g. due to RF collision or bandwidth management), this unsent data packet counts as a miss for all clients i and m[i] += 1 for all i = 1...Nc.

Because a plurality of transmit-windows is used per time frame (see section 1.2 above), the protocol version "ver" of the data packet is determined at or before the start of each transmit-window. Whatever happens during the transmit-window's duration does not influence the transmission.

The array m[i] of missed data packets for each client i is then updated as follows:

1. At the beginning of any transmit-window, increment m[i] for every client i by 1.
2. If a data packet is sent successfully during the transmit-window: For every client i, set m[i] to zero for client i if the transmitted version "ver" as sent by the host is smaller than or equal to client's maximum supported version "ver_max$_i$". Thus, if a client i can receive and process the data packet, m[i] = 0 for this respective client i.

Before the beginning of a transmit-window, the protocol version "ver" to be used for the broadcasted data packet in this transmit-window is determined as follows:

1. Let the desired client update interval t$_{cli}$[i] for each client i be:

$$t_{cli}[i] = f(D[i], ver\_max_i, M_i)$$

where D[i] is a norm function indicative of the distance between the host and the client i, ver_max$_i$ is the maximum supported protocol version of the client i, M$_i$ is indicative of metadata available for the client i, e.g. aircraft type or firmware version, and f() is a dynamic client update function. For a definition of the dynamic client update function f(), see section 2.4.3 below.

2. If the client i is in conflict with the host (i.e. if the client i is in danger of a collision with the host), set t$_{cli}$[i] to 1.
3. Let the send gap g[i] for client i be the discrepancy between the number of missed data packets m[i] by the client i and the desired client update interval t$_{cli}$[i]. For any client i, the send gap g[i] is then given by

$$g[i] = m[i] - t_{cli}[i]$$

Note that the send gap g[i] starts negative and continuously increases if no client-supported transmission has been made. A gap of 0 or higher indicates that the desired client update interval t$_{cli}$[i] is not fulfilled and therefore a need for transmitting a supported data packet to the client i arises.

4. If no g[i] is 0 or higher for all clients i, select the maximum supported protocol version of the host. Break.
5. If some or all g[i] are non-negative, i.e. 0 or higher (i.e. if the desired client update interval t$_{cli}$[i] is missed for some or all clients i), select the protocol version "ver" as the minimum of "ver_max$_i$" of all clients with non-negative g[i].

*2.4.3. Dynamic Updates*

The desired client update interval t$_{cli}$[i] of supported data packets for each client i is not fixed but may be adapted to the current situation in the population of broadcast devices, e.g. depending on active firmware/ protocol versions and/ or depending on situational parameters. This is reflected in the dynamic client update function f(D[i], ver_max$_i$, M$_i$) used for deriving t$_{cli}$[i] as discussed above. The following basic rules apply:

• A base desired client update interval depends on the vehicle type M$_i$ of the client i. Examples are:

  ○ Hang glider, paraglider: 4: If 4 data packets have been missed by client i (i.e. if no supported data packet is received by client i for 4 transmit-windows), then transmit a supported fallback data packet (i.e. with a compatible protocol "ver") to the client i.
  ○ UAV: 2: If 2 data packets have been missed by client i (i.e. if no supported data packet is received by client i for 2 transmit-windows), then transmit a supported fallback data packet (i.e. with a compatible protocol "ver") to the client i.

◦ All others: 1: If 1 data packet has been missed by client i (i.e. if no supported data packet is received by client i for 1 transmit-window), then transmit a supported fallback data packet (i.e. with a compatible protocol "ver") to the client i.

- If a client i signals no RX capabilities (i.e. if the published $ver\_max_i$ is a predefined value), set $t_{cli}[i] = 20$: If 20 data packets have been missed by client i (i.e. if no supported data packet is received by client i for 20 transmit-windows), then transmit a supported fallback data packet (i.e. with a compatible protocol "ver") to the client i. This leads to an effective disregard of client i.

- If the horizontal distance as given by the norm function D[i] is larger than, e.g. 3 km, multiply $t_{cli}[i]$ by 2: If the client i is "far away" horizontally, then increase the number of allowed missed data packets before transmitting a supported fallback data packet (i.e. with a compatible protocol "ver") to the client i by a factor of 2.

- If the vertical separation as given by the norm function D[i] is larger than, e.g. 500 m, multiply $t_{cli}[i]$ by 2: If the client i is "far away" vertically, then increase the number of allowed missed data packets before transmitting a supported fallback data packet (i.e. with a compatible protocol "ver") to the client i by a factor of 2.

- If the approach time (distance divided by the relative speed vector projected on the relative position vector) of the client i is less than 30 seconds, set $t_{cli}[i]$ to 1: If the client i is on a collision course with the host with an expected approach in less than 30 sec, then transmit a supported fallback data packet (i.e. with a compatible protocol "ver") to the client i.

- If a client i's $ver\_max_i$ is far behind the latest AMP protocol (e.g. if a firmware update for the client i is available for more than 2 years), multiple $t_{cli}[i]$ by 2: If the client i's firmware is "old", then increase the number of allowed missed data packets before transmitting a supported fallback data packet (i.e. with a compatible protocol "ver") to the client i by a factor of 2.

A placeholder client for protocol version 0 (most compatible protocol version) and a client update interval of 10 may be added to retain a base, worst-case compatibility.

*3. AMP protocol*

*3.1. Marshalling and Semantics*

A data packet comprises a header section and a payload data section. The size of the header section is 8 bytes, of the payload section is 16 bytes. The header is transmitted in clear (non-encrypted), the payload is encrypted. The data packet can be constructed as follows:

*3.1.1. Header*

The header section of the data packet comprises:

| Field | Description |
| --- | --- |
| id | Indicative of the identifier of the sender, can be either a current identifier $ID_k$ for EPRID (see above) or fixed. |
| ron | Indicative of a subsequent randomly obtained number $RON_k$ for generating $ID_{k+1}$ |
| urgency | Message urgency, can be between NORMAL and MAYDAY. Can have an effect on, e.g. hop_max. |
| hop_max | Maximum number of retransmissions for creating a mesh-network for message relaying between a plurality of broadcast devices. |
| hop_count | Current count of retransmissions, incremented with each message relay. |
| ver | AMP protocol version used by sender in this data packet. Can be evaluated by the receiver to determine which fields to process. |
| ver_max | Maximum AMP protocol version supported by the sender for receive or transmit. |

*3.1.2. Payload*

| Field | Unit/ Scaling | Description |
|---|---|---|
| lat_trunc | | Latitude, truncated with ACT, see above. |
| lon_trunc | | Longitude, truncated with ACT, see above. |
| alt | m | Altitude. |
| acft_type | enum | Aircraft type: Undefined, Glider, Towplane, Helicopter, Parachute, Dropplane, Hangglider, Paraglider, Single-engine piston, Jet, Multi-engine, Balloon, Airship, Blimp, UAV, Static. |
| track | 1° | Ground track. |
| speed | .1 m/s | Ground speed, unsigned ERC, see above. |
| climb | .1 m/s | Climb rate, signed ERC, see above. |
| turnrate | .1 °/s | Turn rate, signed ERC. |
| mov_mode | enum | Discrete movement mode: On ground, Flying, Circling |
| stealth | flag | Indicating intent of sender to reduce visibility |
| notrack | flag | Indicating intent of sender not to track his signal, e.g. with ground station receivers. |
| timestamp | .25 s | Unix epoch timestamp, in quarter seconds, UTC from GNSS. |

*3.2. Encryption and Decryption*

The payload is encrypted to ensure message integrity, system safety and provide protection for the relevant content against eavesdropping.

The AES algorithm with a key size of 128 bits is used. The key is fixed and shared by all participants of the system. Only the payload block (see Section 3.1.2) is encrypted, the header is transmitted in clear.

Prior to encryption, a 128-bit cryptographic nonce is mixed with the payload. The nonce is created deterministically from the header of the data packet, a time stamp of the data packet, and a secret constant. Because the cryptographic nonce contains the time stamp, replay attacks are not feasible.

The broadcasted, encrypted payload is generated as

$$\text{payload}_E = \text{AES}(\text{nonce} \wedge \text{payload}, \text{key})$$

where "^" denotes the bitwise-XOR operator.

Note:

Any embodiments described with respect to the device shall similarly pertain to the method, the computer program product, the use, and the system. Synergetic effects may arise from different combinations of the embodiments although they might not be described in detail.

The scope of the invention is defined by the appended claims.

**Claims**

1. A broadcast device (10) for wirelessly broadcasting information pertaining to a first aircraft (1), the broadcast device (10) comprising:

   - a positioning device (11) configured to determine a position (P1) of the broadcast device (10),
   - a control unit (12) configured to:

     * receive the position (P1) as determined by the positioning device (11), and

\* generate a data packet (D1) comprising the received position (P1), an identifier (ID1) of the broadcast device (10), and a packet protocol version (VER1) of the data packet (D1), wherein the data packet (D1) is generated based on the packet protocol version (VER1), and wherein the broadcast device (10) further comprises

- a radio transmitter (13) configured to receive the generated data packet (D1) and wirelessly broadcast the received data packet (D1),

wherein the broadcasted data packet (D1) is indicative of the to-be-broadcasted information, **characterized in that** the control unit (12) is configured to generate the data packet (D1) such that the data packet (D1) comprises a maximum supported packet protocol version (VER1_MAX) of the broadcast device (10).

2. The broadcast device (10) of claim 1 configured to

- determine the packet protocol version (VER1) of the data packet (D1) depending on a maximum supported foreign packet protocol version (VER2_MAX) of a foreign broadcast device (20) in radio range to the broadcast device (10), and
- generate the data packet (D1) based on the determined packet protocol version (VER1).

3. The broadcast device (10) of claim 2 further comprising a radio receiver (14) configured to receive a foreign data packet (D2) as broadcasted from the foreign broadcast device (20), wherein the foreign data packet (D2) comprises the maximum supported foreign packet protocol version (VER2_MAX) of the foreign broadcast device (20).

4. The broadcast device (10) of claim 3 wherein the foreign data packet (D2) is indicative of information pertaining to a second aircraft (2), and wherein the broadcast device (10) is configured to calculate a collision probability and/or visualize information indicative of a situational awareness between the first aircraft (1) and the second aircraft (2) depending on the information pertaining to the first aircraft (1) and depending on the received information pertaining to the second aircraft (2).

5. The broadcast device (10) of any of the claims 2 to 4 configured to determine the packet protocol version (VER1) depending on a previously determined prior packet protocol version, and in particular depending on a series of previously determined prior packet protocol versions.

6. The broadcast device (10) of any of the claims 2 to 5 configured to count a number (m) of previously unreceivable data packets by the foreign broadcast device (20), and wherein the broadcast device (10) is configured to determine the packet protocol version (VER1) depending on the number (m) of previously unreceivable data packets.

7. The broadcast device (10) of any of the claims 2 to 6 configured to derive a desired client update interval ($t_{cli}$) for the foreign broadcast device (20), and wherein the broadcast device (10) is configured to determine the packet protocol version (VER1) depending on the desired client update interval ($t_{cli}$).

8. The broadcast device (10) of claim 7 configured to derive the desired client update interval ($t_{cli}$) depending on at least one of

- a distance (D) between the broadcast device (10) and the foreign broadcast device (20),
- an approach rate of the foreign broadcast device (20),
- metadata (M) of the foreign broadcast device (20), and
- the maximum supported foreign packet protocol version (VER2_MAX) of the foreign broadcast device (20).

9. The broadcast device (10) of claim 6 and of any of the claims 7 or 8 configured to derive a send gap (g) for the foreign broadcast device (20) depending on a discrepancy between the number of unreceivable data packets (m) and the desired client update interval ($t_{cli}$), and wherein the broadcast device (10) is configured to determine the packet protocol version (VER1) depending on the send gap (g).

10. The broadcast device (10) of any of the claims 2 to 9 configured to maintain a list of all foreign broadcast devices (20, 30) in radio range to the broadcast device (10), wherein the list is indicative of the maximum supported foreign packet protocol version (VER2 _MAX, VER3_MAX) of each foreign broadcast device (20, 30), and
wherein the broadcast device (10) is configured to determine the packet protocol version (VER1) depending on said maximum supported foreign packet protocol version (VER2 _MAX, VER3_MAX) of each of said foreign broadcast devices (20, 30).

11. The broadcast device (10) of any of the preceding claims configured to generate the data packet (D1) in such a way that the data packet (D1) comprises a header section and a payload section, and in particular wherein the header section is non-encrypted and/or wherein the payload section is encrypted.

12. The broadcast device (10) of claim 11 configured to encrypt the payload section of the data packet (D1) by means of a symmetric cryptographic algorithm,
and in particular wherein the broadcast device (10) is configured to use a cryptographic nonce depending on the header section of the data packet (D1), on a time stamp, and on a secret constant for encryption.

13. The broadcast device (10) of any of the preceding claims configured to generate the data packet (D1) in such a way that the data packet (D1) comprises a timestamp, in particular in the payload section of the data packet.

14. The broadcast device (10) of any of the claims 2 to 13 configured to

- repeatedly determine an updated position (P1) of the broadcast device (10),
- repeatedly determine an updated packet protocol version (VER1) of an updated data packet (D1), and
- repeatedly generate and broadcast the updated data packet (D 1) comprising the updated position (P1) and the updated packet protocol version (VER1), wherein said updated data packet (D1) is generated based on the updated packet protocol version (VER1),

and in particular wherein any time interval between two of such consecutive updates is between 0.1 s and 5 s, in particular is between 0.5 s and 1 s, and in particular is 1 s.

15. The broadcast device (10) of claim 14 configured to

- determine the updated position (P1) once for every time frame,
- determine the updated packet protocol version (VER1) once for every transmit-window of the time frame, and
- generate and broadcast the updated data packet (D1) once in every transmit-window of the time frame.

16. The broadcast device (10) of any of the preceding claims configured to generate the data packet (D1) in such a way that the data packet (D 1) comprises a pair c = (e, m) with an exponent e being a natural number and with a mantissa m being a natural number,

wherein the pair c is indicative of a value v,
wherein the mantissa m has a bit width of $N_m$ and wherein the exponent e has a bit width of $N_e$,
wherein

$$v = 2^e * (2^{Nm} + m) - 2^{Nm}$$

and wherein the bit widths $N_m$ and $N_e$ are selected such that a total bit width $N=N_e+N_m$ of the pair c is smaller than a total bit width of the value v.

17. A method for, by means of a broadcast device (10), in particular of any one of the preceding claims, wirelessly broadcasting information pertaining to a first aircraft (1), the method comprising steps of

- providing the broadcast device (10) comprising a positioning device (11), a control unit (12), and a radio transmitter (13),
- by means of the positioning device (11) determining a position (P1) of the broadcast device (10),
- by means of the control unit (12):

* receiving the position (P1) as determined by the positioning device (11), and
* generating a data packet (D1) comprising the received position (P1), an identifier (ID1) of the broadcast device (10), and a packet protocol version (VER1) of the data packet (D1), wherein the data packet (D1) is generated based on the packet protocol version (VER1), and
wherein the method comprises a further step of

- by means of the radio transmitter (13) receiving the generated data packet (D1) and wirelessly broadcasting the received data packet (D1),

wherein the broadcasted data packet (D1) is indicative of the to-be-broadcasted information,
**characterized in that** the step of generating the data packet (D1) is performed such that the data packet (D1) comprises a maximum supported packet protocol version (VER1_MAX) of the broadcast device (10).

18. The method of claim 17 comprising a further step of

* determining the packet protocol version (VER1) of the data packet (D1) depending on a maximum supported foreign packet protocol version (VER2 _MAX) of a foreign broadcast device (20) in radio range to the broadcast device (10), and
wherein the data packet (D1) is generated based on the determined packet protocol version (VER1).

19. The method of claim 18 comprising a further step of

- by means of a radio receiver (14) of the broadcast device (10) receiving a foreign data packet (D2) as broadcasted from the foreign broadcast device (20), wherein the foreign data packet (D2) comprises the maximum supported foreign packet protocol version (VER2 _MAX) of the foreign broadcast device (20).

20. The method of any of the claims 18 to 19 comprising further steps of

- counting a number (m) of previously unreceivable data packets by the foreign broadcast device (20),
- deriving a desired client update interval ($t_{cli}$) for the foreign broadcast device (20), in particular depending on at least one of

* a distance (D) between the broadcast device (10) and the foreign broadcast device (20),
* an approach rate of the foreign broadcast device (20),
* metadata (M) of the foreign broadcast device (20), and
* the maximum supported foreign packet protocol version (VER2_MAX) of the foreign broadcast device (20), and wherein the method comprises a further step of

- deriving a send gap (g) for the foreign broadcast device (20) depending on a discrepancy between the number of unreceivable data packets (m) and the desired client update interval ($t_{cli}$),
and wherein the packet protocol version (VER1) is determined depending on the send gap (g).

21. The method of any of the claims 18 to 20 comprising a further step of

- maintaining a list of all foreign broadcast devices (20, 30) in radio range to the broadcast device (10), wherein the list is indicative of the maximum supported foreign packet protocol version (VER2 _MAX, VER3_MAX) of each foreign broadcast device (20, 30), and

wherein the packet protocol version (VER1) is determined depending on the maximum supported foreign packet protocol version (VER2_MAX, VER3_MAX) of each of said foreign broadcast devices (20, 30).

22. A computer program product comprising instructions to cause a device of any of the claims 1 to 16 to execute the steps of a method of any of the claims 17 to 21.

23. A computer-readable medium having stored thereon the computer program product of claim 22.

24. A system for aircraft collision avoidance comprising

- a first broadcast device (10) of any of the claims 1 to 16 at a first aircraft (1) for wirelessly broadcasting information pertaining to the first aircraft (1), and
- a second broadcast device (20) of any of the claims 1 to 16 at a second aircraft (2) for wirelessly broadcasting information pertaining to the second aircraft (2).

**Patentansprüche**

1.  Eine Sendevorrichtung (10) zum drahtlosen Aussenden von Informationen, die ein erstes Luftfahrzeug (1) betreffen, wobei die Sendevorrichtung (10) umfasst:

    - eine Ortungsvorrichtung (11), die dazu ausgestaltet ist, eine Position (P1) der Sendevorrichtung (10) zu bestimmen,
    - eine Steuereinheit (12), die dazu ausgestaltet ist:

        * die von der Ortungsvorrichtung (11) bestimmte Position (P1) zu empfangen, und
        * ein Datenpakets (D1) zu erzeugen, das die empfangene Position (P1), eine Kennung (ID1) der Sendevorrichtung (10) und eine Paketprotokollversion (VER1) des Datenpakets (D1) umfasst, wobei das Datenpaket (D1) auf der Grundlage der Paketprotokollversion (VER1) erzeugt wird, und wobei die Sendevorrichtung (10) weiterhin umfasst

    - einen Funksender (13), der dazu ausgestaltet ist, das erzeugte Datenpaket (D1) zu empfangen und das empfangene Datenpaket (D1) drahtlos auszusenden,

        wobei das gesendete Datenpaket (D1) bezeichnend für die auszusendende Information ist, **dadurch gekennzeichnet, dass** die Steuereinheit (12) dazu ausgestaltet ist, das Datenpaket (D1) so zu erzeugen, dass das Datenpaket (D1) eine maximal unterstützte Paketprotokollversion (VER1_MAX) der Sendevorrichtung (10) umfasst.

2.  Die Sendevorrichtung (10) nach Anspruch 1, dazu ausgestaltet,

    - die Paketprotokollversion (VER1) des Datenpakets (D1) in Abhängigkeit von einer maximal unterstützten externen Paketprotokollversion (VER2_MAX) einer externen Sendevorrichtung (20) in Funkreichweite zur Sendevorrichtung (10) zu bestimmen, und
    - das Datenpaket (D1) auf der Grundlage der bestimmten Paketprotokollversion (VER1) zu erzeugen.

3.  Die Sendevorrichtung (10) nach Anspruch 2 weiterhin umfassend einen Funkempfänger (14), der dazu ausgestaltet ist, dass er ein externes Datenpaket (D2) empfängt, das von der externen Sendevorrichtung (20) gesendet wird, wobei das externe Datenpaket (D2) die maximal unterstützte externe Paketprotokollversion (VER2_MAX) der externen Sendevorrichtung (20) umfasst.

4.  Die Sendevorrichtung (10) nach Anspruch 3, wobei das externe Datenpaket (D2) für Informationen bezeichnend ist, die ein zweites Luftfahrzeug (2) betreffen, und wobei die Sendevorrichtung (10) dazu ausgestaltet ist, eine Kollisionswahrscheinlichkeit zu berechnen und/oder Informationen zu visualisieren, die für eine Situationswahrnehmung zwischen dem ersten Luftfahrzeug (1) und dem zweiten Luftfahrzeug (2) bezeichnend sind, und zwar in Abhängigkeit von den Informationen, die das erste Luftfahrzeug (1) betreffen, und in Abhängigkeit von den empfangenen Informationen, die das zweite Luftfahrzeug (2) betreffen.

5.  Die Sendevorrichtung (10) nach einem der Ansprüche 2 bis 4, dazu ausgestaltet, dass sie die Paketprotokollversion (VER1) in Abhängigkeit von einer zuvor bestimmten früheren Paketprotokollversion und insbesondere in Abhängigkeit von einer Abfolge von zuvor bestimmten früheren Paketprotokollversionen bestimmt.

6.  Die Sendevorrichtung (10) nach einem der Ansprüche 2 bis 5, dazu ausgestaltet, dass sie eine Anzahl (m) von zuvor nicht empfangbaren Datenpaketen durch die externe Sendevorrichtung (20) zählt, und wobei die Sendevorrichtung (10) dazu ausgestaltet ist, um die Paketprotokollversion (VER1) in Abhängigkeit von der Anzahl (m) der zuvor nicht empfangbaren Datenpakete zu bestimmen.

**7.** Die Sendevorrichtung (10) nach einem der Ansprüche 2 bis 6, dazu ausgestaltet, dass sie ein gewünschtes Client-Aktualisierungsintervall ($t_{cli}$) für die externe Sendevorrichtung (20) bestimmt,
und wobei die Sendevorrichtung (10) dazu ausgestaltet ist, die Paketprotokollversion (VER1) in Abhängigkeit von dem gewünschten Client-Aktualisierungsintervall ($t_{cli}$) zu bestimmen.

**8.** Die Sendevorrichtung (10) nach Anspruch 7, dazu ausgestaltet, dass sie das gewünschte Client-Aktualisierungsintervall ($t_{cli}$) bestimmt in Abhängigkeit von mindestens einem Element der Gruppe bestehend aus

- einem Abstand (D) zwischen der Sendevorrichtung (10) und der externen Sendevorrichtung (20),
- einer Annäherungsrate der externen Sendevorrichtung (20),
- Metadaten (M) der externen Sendevorrichtung (20), und
- der maximal unterstützten externen Paketprotokollversion (VER2 _MAX) der externen Sendevorrichtung (20).

**9.** Die Sendevorrichtung (10) nach Anspruch 6 und nach einem der Ansprüche 7 oder 8, dazu ausgestaltet, dass sie eine Sendeabweichung (g) für die externe Sendevorrichtung (20) in Abhängigkeit von einer Diskrepanz zwischen der Anzahl der nicht empfangbaren Datenpakete (m) und dem gewünschten Client-Aktualisierungsintervall ($t_{cli}$) bestimmt,
und wobei die Sendevorrichtung (10) dazu ausgestaltet ist, um die Paketprotokollversion (VER1) in Abhängigkeit von der Sendeabweichung (g) zu bestimmen.

**10.** Die Sendevorrichtung (10) nach einem der Ansprüche 2 bis 9, dazu ausgestaltet, dass sie eine Liste aller externen Sendevorrichtungen (20, 30) in Funkreichweite zu der Sendevorrichtung (10) nachführt, wobei die Liste für die maximal unterstützte externe Paketprotokollversion (VER2_MAX, VER3_MAX) jeder externen Sendevorrichtung (20, 30) bezeichnend ist, und
wobei die Sendevorrichtung (10) dazu ausgestaltet ist, die Paketprotokollversion (VER1) in Abhängigkeit von der maximal unterstützten externen Paketprotokollversion (VER2 _MAX, VER3_MAX) jeder der externen Sendevorrichtungen (20, 30) zu bestimmen.

**11.** Die Sendevorrichtung (10) nach einem der vorhergehenden Ansprüche, dazu ausgestaltet, dass sie das Datenpaket (D1) derart erzeugt, dass das Datenpaket (D1) einen Header-Bereich und einen Nutzdatenbereich umfasst, und insbesondere wobei der Header-Bereich unverschlüsselt ist und/oder wobei der Nutzdatenbereich verschlüsselt ist.

**12.** Die Sendevorrichtung (10) nach Anspruch 11, dazu ausgestaltet, dass sie den Nutzdatenbereich des Datenpakets (D1) mit Hilfe eines symmetrischen kryptografischen Algorithmus verschlüsselt,
und insbesondere wobei die Sendevorrichtung (10) dazu ausgestaltet ist, eine kryptographische Nonce in Abhängigkeit vom Header-Bereich des Datenpakets (D1), von einem Zeitstempel und von einer geheimen Konstante zur Verschlüsselung zu verwenden.

**13.** Die Sendevorrichtung (10) nach einem der vorhergehenden Ansprüche, dazu ausgestaltet, dass sie das Datenpaket (D1) so erzeugt, dass das Datenpaket (D1) einen Zeitstempel enthält, insbesondere im Nutzdatenbereich des Datenpakets.

**14.** Die Sendevorrichtung (10) nach einem der Ansprüche 2 bis 13, dazu ausgestaltet

- wiederholt eine aktualisierte Position (P1) der Sendevorrichtung (10) zu bestimmen,
- wiederholt eine aktualisierte Paketprotokollversion (VER1) eines aktualisierten Datenpakets (D1) zu bestimmen, und
- wiederholt ein aktualisiertes Datenpaket (D1) zu erzeugen und auszusenden, das die aktualisierte Position (P1) und die aktualisierte Paketprotokollversion (VER1) umfasst, wobei das aktualisierte Datenpaket (D1) auf der Grundlage der aktualisierten Paketprotokollversion (VER1) erzeugt wird,

und insbesondere, wobei jedes Zeitintervall zwischen zwei dieser aufeinanderfolgenden Aktualisierungen zwischen 0.1 s und 5 s, insbesondere zwischen 0.5 s und 1 s und insbesondere 1 s beträgt.

**15.** Die Sendevorrichtung (10) nach Anspruch 14, dazu ausgestaltet,

- die aktualisierte Position (P1) einmal für jedes Zeitfenster zu bestimmen,
- die aktualisierte Paketprotokollversion (VER1) einmal für jedes Sendefenster des Zeitfensters zu bestimmen, und

- das aktualisierte Datenpaket (D1) einmal in jedem Sendefenster des Zeitfensters zu erzeugen und auszusenden.

16. Die Sendevorrichtung (10) nach einem der vorhergehenden Ansprüche, dazu ausgestaltet, dass sie das Datenpaket (D1) so erzeugt, dass das Datenpaket (D1) ein Paar c = (e, m) mit einem Exponenten e, der eine natürliche Zahl ist, und mit einer Mantisse m, die eine natürliche Zahl ist, umfasst,

wobei das Paar c bezeichnend für einen Wert v ist,
wobei die Mantisse m eine Bitbreite von $N_m$ hat und wobei der Exponent e eine Bitbreite von $N_e$ hat,
wobei

$$v = 2^e * (2^{Nm} + m) - 2^{Nm}$$

und wobei die Bitbreiten $N_m$ und $N_e$ so gewählt sind, dass eine Gesamtbitbreite $N=N_e+N_m$ des Paares c kleiner ist als eine Gesamtbitbreite des Wertes v.

17. Ein Verfahren zum drahtlosen Aussenden von Informationen, die ein erstes Luftfahrzeug (1) betreffen, mittels einer Sendevorrichtung (10), insbesondere nach einem der vorhergehenden Ansprüche, wobei das Verfahren Schritte umfasst:

- Bereitstellen der Sendevorrichtung (10) mit einer Ortungsvorrichtung (11), einer Steuereinheit (12) und einem Funksender (13),
- mit Hilfe der Ortungsvorrichtung (11) Bestimmen einer Position (P1) der Sendevorrichtung (10),
- mit Hilfe der Steuereinheit (12):

  * Empfangen der von der Ortungsvorrichtung (11) bestimmten Position (P1), und
  * Erzeugen eines Datenpakets (D1), das die empfangene Position (P1), eine Kennung (ID1) der Sendevorrichtung (10) und eine Paketprotokollversion (VER1) des Datenpakets (D1) umfasst, wobei das Datenpaket (D1) auf der Grundlage der Paketprotokollversion (VER1) erzeugt wird, und
  wobei das Verfahren einen weiteren Schritt umfasst:

- mit Hilfe des Funksenders (13) Empfangen des erzeugten Datenpakets (D1) und drahtloses Aussenden des empfangenen Datenpakets (D1),

  wobei das ausgesendete Datenpaket (D1) bezeichnend für die auszusendende Information ist,
  **dadurch gekennzeichnet, dass** der Schritt des Erzeugens des Datenpakets (D1) so durchgeführt wird, dass das Datenpaket (D1) eine maximal unterstützte Paketprotokollversion (VER1_MAX) der Sendevorrichtung (10) umfasst.

18. Das Verfahren nach Anspruch 17, umfassend einen weiteren Schritt:

  * Bestimmen der Paketprotokollversion (VER1) des Datenpakets (D1) in Abhängigkeit von einer maximal unterstützten externen Paketprotokollversion (VER2 _MAX) einer externen Sendevorrichtung (20) in Funkreichweite zur Sendevorrichtung (10), und
  wobei das Datenpaket (D1) auf der Grundlage der bestimmten Paketprotokollversion (VER1) erzeugt wird.

19. Das Verfahren nach Anspruch 18, umfassend einen weiteren Schritt:

  - mittels eines Funkempfängers (14) der Sendevorrichtung (10), Empfangen eines von der externen Sendevorrichtung (20) ausgesendeten externen Datenpakets (D2), wobei das externe Datenpaket (D2) die maximal unterstützte externe Paketprotokollversion (VER2_MAX) der externen Sendevorrichtung (20) umfasst.

20. Das Verfahren nach einem der Ansprüche 18 bis 19, umfassend die weiteren Schritte:

  - Zählen einer Anzahl (m) von zuvor nicht empfangbaren Datenpaketen durch die externe Sendevorrichtung (20),
  - Bestimmen eines gewünschten Client-Aktualisierungsintervalls ($t_{cli}$) für die externe Sendevorrichtung (20),

EP 4 165 799 B1

insbesondere in Abhängigkeit von mindestens einem Element aus der Gruppe bestehend aus

* einem Abstand (D) zwischen der Sendevorrichtung (10) und der externen Sendevorrichtung (20),
* einer Annäherungsrate der externen Sendevorrichtung (20),
* Metadaten (M) der externen Sendevorrichtung (20), und
* der maximal unterstützten externen Paketprotokollversion (VER2 _MAX) der externen Sendevorrichtung (20),
und wobei das Verfahren einen weiteren Schritt umfasst:

- Bestimmen einer Sendeabweichung (g) für die externe Sendevorrichtung (20) in Abhängigkeit von einer Diskrepanz zwischen der Anzahl der nicht empfangbaren Datenpakete (m) und dem gewünschten Client-Aktualisierungsintervall ($t_{cli}$),

und wobei die Paketprotokollversion (VER1) in Abhängigkeit von der Sendeabweichung (g) bestimmt wird.

21. Das Verfahren nach einem der Ansprüche 18 bis 20, umfassend einen weiteren Schritt:

- Nachführen einer Liste aller externen Sendevorrichtungen (20, 30) in Funkreichweite zu der Sendevorrichtung (10), wobei die Liste bezeichnend für die maximal unterstützte externe Paketprotokollversion (VER2 _MAX, VER3_MAX) jeder externen Sendevorrichtung (20, 30) ist, und

wobei die Paketprotokollversion (VER1) in Abhängigkeit von der maximal unterstützten externen Paketprotokollversion (VER2 _MAX, VER3_MAX) jeder der externen Sendevorrichtungen (20, 30) bestimmt wird.

22. Ein Computerprogrammprodukt, das Anweisungen enthält, um eine Vorrichtung nach einem der Ansprüche 1 bis 16 zu veranlassen, die Schritte eines Verfahrens nach einem der Ansprüche 17 bis 21 auszuführen.

23. Ein computerlesbares Medium, auf dem das Computerprogrammprodukt nach Anspruch 22 gespeichert ist.

24. Ein System zur Kollisionsvermeidung von Luftfahrzeugen mit

- einer ersten Sendevorrichtung (10) nach einem der Ansprüche 1 bis 16 an einem ersten Luftfahrzeug (1) zur drahtlosen Aussendung von Informationen, die das erste Luftfahrzeug (1) betreffen, und
- einer zweiten Sendevorrichtung (20) nach einem der Ansprüche 1 bis 16 an einem zweiten Luftfahrzeug (2) zur drahtlosen Aussendung von Informationen, die das zweite Luftfahrzeug (2) betreffen.

**Revendications**

1. Dispositif de diffusion (10) pour diffuser sans fil des informations relatives à un premier aéronef (1), le dispositif de diffusion (10) comprenant :

- un dispositif de positionnement (11) configuré pour déterminer une position (P1) du dispositif de diffusion (10),
- une unité de commande (12) configurée pour :

* recevoir la position (P1) telle que déterminée par le dispositif de positionnement (11), et
* générer un paquet de données (D1) comprenant la position reçue (P1), un identifiant (ID1) du dispositif de diffusion (10) et une version de protocole de paquet (VER1) du paquet de données (D1), le paquet de données (D1) étant généré sur la base de la version de protocole de paquet (VER1), et
dans lequel le dispositif de diffusion (10) comprend en outre

- un émetteur radio (13) configuré pour recevoir le paquet de données généré (D1) et diffuser sans fil le paquet de données reçu (D1),

dans lequel le paquet de données diffusé (D1) indique les informations à diffuser,
**caractérisé en ce que** l'unité de commande (12) est configurée pour générer le paquet de données (D1) de sorte que le paquet de données (D1) comprenne une version de protocole de paquet maximale prise en charge (VER1_MAX) par le dispositif de diffusion (10).

25

2. Le dispositif de diffusion (10) de la revendication 1 est configuré pour

   - déterminer la version de protocole de paquet (VER1) du paquet de données (D1) en fonction d'une version maximale de protocole de paquet étranger prise en charge (VER2 _MAX) par un dispositif de diffusion étranger (20) à portée radio du dispositif de diffusion (10), et
   - générer le paquet de données (D1) sur la base de la version de protocole de paquet déterminée (VER1).

3. Le dispositif de diffusion (10) de la revendication 2 comprend en outre un récepteur radio (14) configuré pour recevoir un paquet de données étranger (D2) diffusé par le dispositif de diffusion étranger (20), dans lequel le paquet de données étranger (D2) comprend la version maximale de protocole de paquet étranger prise en charge (VER2_MAX) par le dispositif de diffusion étranger (20).

4. Le dispositif de diffusion (10) de la revendication 3, dans lequel le paquet de données étrangères (D2) indique des informations relatives à un deuxième aéronef (2),
   et dans lequel le dispositif de diffusion (10) est configuré pour calculer une probabilité de collision et/ou visualiser des informations indiquant une connaissance de la situation entre le premier aéronef (1) et le second aéronef (2) en fonction des informations relatives au premier aéronef (1) et en fonction des informations reçues relatives au second aéronef (2).

5. Le dispositif de diffusion (10) de l'une des revendications 2 à 4 configuré pour déterminer la version de protocole de paquet (VER1) en fonction d'une version de protocole de paquet antérieurement déterminée, et en particulier en fonction d'une série de versions de protocole de paquet antérieures déterminées précédemment.

6. Le dispositif de diffusion (10) de l'une des revendications 2 à 5 configuré pour compter un nombre (m) de paquets de données précédemment non-recevables par le dispositif de diffusion étranger (20),
   et dans lequel le dispositif de diffusion (10) est configuré pour déterminer la version du protocole de paquets (VER1) en fonction du nombre (m) de paquets de données précédemment non-recevables.

7. Le dispositif de diffusion (10) de l'une des revendications 2 à 6 est configuré pour dériver un intervalle de mise à jour client souhaité (tcli) pour le dispositif de diffusion étranger (20),
   et dans lequel le dispositif de diffusion (10) est configuré pour déterminer la version du protocole de paquet (VER1) en fonction de l'intervalle de mise à jour du client souhaité (tcli).

8. Le dispositif de diffusion (10) de la revendication 7 est configuré pour dériver l'intervalle de mise à jour du client souhaité (tcli) en fonction d'au moins l'un des éléments suivants

   - une distance (D) entre le dispositif de diffusion (10) et le dispositif de diffusion étranger (20),
   - une vitesse d'approche du dispositif de diffusion étranger (20),
   - des métadonnées (M) du dispositif de diffusion étranger (20), et
   - la version maximale du protocole de paquets étrangers (VER2 _MAX) prise en charge par le dispositif de diffusion étranger (20).

9. Le dispositif de diffusion (10) de la revendication 6 et de l'une quelconque des revendications 7 ou 8, configuré pour dériver un décalage d'envoi (g) pour le dispositif de diffusion étranger (20) en fonction d'une divergence entre le nombre de paquets de données non recevables (m) et l'intervalle de mise à jour client souhaité (tcli),
   et dans lequel le dispositif de diffusion (10) est configuré pour déterminer la version du protocole de paquet (VER1) en fonction du décalage d'envoi (g).

10. Le dispositif de diffusion (10) de l'une des revendications 2 à 9, configuré pour maintenir une liste de tous les dispositifs de diffusion étrangers (20, 30) à portée radio du dispositif de diffusion (10), dans lequel la liste indique la version maximale de protocole de paquet étranger prise en charge (VER2_MAX, VER3_MAX) par chaque dispositif de diffusion étranger (20, 30) et
   le dispositif de diffusion (10) est configuré pour déterminer la version du protocole de paquet (VER1) en fonction de la version maximale du protocole de paquet étranger (VER2_MAX, VER3_MAX) prise en charge par chacun desdits dispositifs de diffusion étrangers (20, 30).

11. Le dispositif de diffusion (10) de l'une quelconque des revendications précédentes, configuré pour générer le paquet de données (D1) de manière à ce que le paquet de données (D1) comprenne une section d'en-tête et une section de données utiles, et en particulier dans lequel la section d'en-tête n'est pas cryptée et/ou dans lequel la section de données utiles est cryptée.

12. Le dispositif de diffusion (10) de la revendication 11 configuré pour crypter la section de données utiles du paquet de données (D1) au moyen d'un algorithme cryptographique symétrique,
et en particulier dans lequel le dispositif de diffusion (10) est configuré pour utiliser un nonce cryptographique dépendant de la section d'en-tête du paquet de données (D1), d'un horodatage et d'une constante secrète pour le cryptage.

13. Le dispositif de diffusion (10) de l'une quelconque des revendications précédentes est configuré pour générer le paquet de données (D1) de manière à ce que le paquet de données (D1) comprenne un horodatage, en particulier dans la section des données utiles du paquet de données.

14. Le dispositif de diffusion (10) de l'une des revendications 2 à 13, configuré pour

- déterminer de manière répétée une position mise à jour (P1) du dispositif de diffusion (10),
- déterminer de manière répétée une version de protocole de paquet mise à jour (VER1) d'un paquet de données mis à jour (D1), et
- générer et diffuser de manière répétée le paquet de données mis à jour (D1) comprenant la position mise à jour (P1) et la version mise à jour du protocole de paquet (VER1), ledit paquet de données mis à jour (D1) étant généré sur la base de la version mise à jour du protocole de paquet (VER1),

et en particulier dans lequel tout intervalle de temps entre deux de ces mises à jour consécutives est compris entre 0,1 s et 5 s, en particulier entre 0,5 s et 1 s, et en particulier est de 1 s.

15. Le dispositif de diffusion (10) de la revendication 14 configuré pour

- déterminer la position mise à jour (P1) une fois pour chaque intervalle,
- déterminer la version mise à jour du protocole de paquet (VER1) une fois pour chaque fenêtre d'émission de l'intervalle, et
- générer et diffuser le paquet de données mis à jour (D1) une fois dans chaque fenêtre d'émission de l'intervalle.

16. Le dispositif de diffusion (10) de l'une des revendications précédentes est configuré pour générer le paquet de données (D1) de manière à ce que le paquet de données (D1) comprenne une paire c = (e, m) avec un exposant e, qui est un nombre naturel, et avec une mantisse m, qui est un nombre naturel,

dans lequel la paire c est indicative d'une valeur v,
dans lequel la mantisse m a une largeur de bit de Nm et dans lequel l'exposant e a une largeur de bit de Ne,
dans lequel

$$v = 2e * (2Nm + m) - 2Nm$$

et dans lequel les largeurs de bits Nm et Ne sont sélectionnées de telle sorte qu'une largeur de bit totale N=Ne+Nm de la paire c est inférieure à une largeur de bit totale de la valeur v.

17. Procédé pour diffuser sans fil, au moyen d'un dispositif de diffusion (10), en particulier de l'une quelconque des revendications précédentes, des informations relatives à un premier aéronef (1), le procédé comprenant des étapes consistant à :

- fournir le dispositif de diffusion (10) comprenant un dispositif de positionnement (11), une unité de commande (12) et un émetteur radio (13),
- déterminer, au moyen du dispositif de positionnement (11), une position (P1) du dispositif de diffusion (10),
- au moyen de l'unité de commande (12) :

* recevoir la position (P1) telle que déterminée par le dispositif de positionnement (11), et
* générer un paquet de données (D1) comprenant la position reçue (P1), un identifiant (ID1) du dispositif de diffusion (10) et une version de protocole de paquet (VER1) du paquet de données (D1), le paquet de données (D1) étant généré sur la base de la version de protocole de paquet (VER1), et
dans lequel la méthode comprend une étape supplémentaire consistant à :

- au moyen de l'émetteur radio (13), recevoir le paquet de données généré (D1) et diffuser sans fil le paquet de données reçu (D1),

dans lequel le paquet de données diffusé (D1) indique l'information à diffuser,
**caractérisé en ce que** l'étape consistant à générer le paquet de données (D1) est réalisée de telle sorte que le paquet de données (D1) comprend une version de protocole de paquet maximale prise en charge (VER1_MAX) par le dispositif de diffusion (10).

18. Le procédé de la revendication 17, comprenant une étape supplémentaire consistant à

* déterminer la version du protocole de paquet (VER1) du paquet de données (D1) en fonction d'une version maximale de protocole de paquet étranger (VER2_MAX) prise en charge par un dispositif de diffusion étranger (20) à portée radio du dispositif de diffusion (10), et
dans lequel le paquet de données (D1) est généré sur la base de la version de protocole de paquet déterminée (VER1).

19. Le procédé de la revendication 18 comprenant une étape supplémentaire consistant à

- recevoir, au moyen d'un récepteur radio (14) du dispositif de diffusion (10), un paquet de données étranger (D2) tel que diffusé par le dispositif de diffusion étranger (20), dans lequel le paquet de données étranger (D2) comprend la version maximale de protocole de paquet étranger prise en charge (VER2_MAX) par le dispositif de diffusion étranger (20).

20. Le procédé de l'une des revendications 18 à 19, comprenant des étapes supplémentaires consistant à

- compter un nombre (m) de paquets de données précédemment non reçus par le dispositif de diffusion étranger (20),
- déterminer un intervalle de mise à jour client souhaité (tcli) pour le dispositif de diffusion étranger (20), notamment en fonction d'au moins l'un des éléments suivants

* une distance (D) entre le dispositif de diffusion (10) et le dispositif de diffusion étranger (20),
* une vitesse d'approche du dispositif de diffusion étranger (20),
* des métadonnées (M) du dispositif de diffusion étranger (20), et
* la version maximale du protocole de paquets étrangers pris en charge (VER2_MAX) par le dispositif de diffusion étranger (20),
et dans lequel la méthode comprend une étape supplémentaire consistant à

- l'établissement d'un décalage d'envoi (g) pour le dispositif de diffusion étranger (20) en fonction d'une divergence entre le nombre de paquets (m) de données nonrecevables et l'intervalle de mise à jour du client souhaité (tcli),
et dans lequel la version du protocole de paquet (VER1) est déterminée en fonction du décalage d'envoi (g).

21. La méthode décrite dans l'une des revendications 18 à 20, comprenant une étape supplémentaire consistant à

- maintenir une liste de tous les dispositifs de diffusion étrangers (20, 30) à portée radio du dispositif de diffusion (10), la liste indiquant la version maximale de protocole de paquet étranger prise en charge (VER2 _MAX, VER3_MAX) par chaque dispositif de diffusion étranger (20, 30), et

la version du protocole de paquets (VER1) est déterminée en fonction de la version maximale du protocole de paquets étrangers (VER2 _MAX, VER3 _MAX) prise en charge par chacun desdits dispositifs de diffusion étrangers (20, 30).

22. Produit de programme d'ordinateur comprenant des instructions pour amener un dispositif de l'une des revendications 1 à 16 à exécuter les étapes d'une méthode de l'une des revendications 17 à 21.

**23.** Support lisible par ordinateur sur lequel est stocké le produit de programme d'ordinateur de la revendication 22.

**24.** Système d'évitement des collisions d'aéronefs comprenant

- un premier dispositif de diffusion (10) selon l'une des revendications 1 à 16 à un premier aéronef (1) pour diffuser sans fil des informations relatives au premier aéronef (1), et
- un second dispositif de diffusion (20), selon l'une des revendications 1 à 16, à un second aéronef (2) et permettant de diffuser sans fil des informations relatives au second aéronef (2).

## Fig. 1b

Quantization Step

## Fig. 1c

Avg. Quantization Error %

## Fig. 1a

## Fig. 2

## Fig. 7

| time | $T_{k-6}$ | $T_{k-5}$ | $T_{k-4}$ | $T_{k-3}$ | $T_{k-2}$ | $T_{k-1}$ | $T_k$ |
|---|---|---|---|---|---|---|---|
| tw | | 1a | 1b | 2a | 2b | 3a | 3b |
| tf | | 1 | | 2 | | 3 | |
| P1 | $P1_{k-6}$ | | $P1_{k-4}$ | | $P1_{k-2}$ | | $P1_k$ |
| m | $+1_1$ | $+1_2$ | $+1_3$ | $+1_1$ | $+1_1$ | $+1_2$ | $+1$ |
| $t_{cli}$ | 1*2 | 1*2 | 1*2 | 1 | 1*4 | 1 | |
| g | -1 | 0 | 1 | 0 | -3 | 1 | |
| D1 | | RF | | | | | |
| VER1 | v5 | v4 | v4 | v4 | v5 | v4 | |
| set m=0 | false | false | true | true | false | true | |

## Fig. 3

| 31 | 30 | 29 | 28 | 27 | 26 | 25 | 24 | ... | 7 | 6 | 5 | 4 | 3 | 2 | 1 | 0 |

**Fig. 4**

**Fig. 5**

GPS

GPS

GPS

D2(P2, ID2,
     VER2, VER2_MAX)

D1(P1, ID1,
     VER1, VER1_MAX)

P2

20

1

2

P1

10

D3(P3, ID3
     VER3, VER3_MAX)

D1, D2, D3

P3

30

3

40

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018027381 A1

**Non-patent literature cited in the description**

- Key distribution mechanism in secure ADS-B networks. **KACEM THABET et al.** 2015 INTEGRATED COMMUNICATION, NAVIGATION AND SURVEILLANCE CONFERENCE (ICNS). IEEE, 21 April 2015